# FASCICULE DE BREVET EUROPEEN

(11) **EP 3 945 450 B1**
(45) Date de publication et mention de la délivrance du brevet: **28.08.2024**
(21) Numéro de dépôt: 21186181.0
(22) Date de dépôt: 16.07.2021
(51) Int. Cl.: G06K 7/14, G06K 19/06

(54) **LECTURE D'UN CODE GRAPHIQUE**
GRAFISCHECODELESUNG
GRAPHIC CODE READING

(30) Priorité: 27.07.2020 FR 2007919
(43) Date de publication de la demande: 02.02.2022
(73) Titulaire: IDEMIA France, 92400 Courbevoie (FR)
(72) Inventeur: AZUELOS, Paul, 92400 COURBEVOIE (FR); LOSTANLEN, Matéo, 92400 COURBEVOIE (FR)
(74) Mandataire: Santarelli

(56) Documents cités:
- EP-A1- 1 807 796
- EP-A2- 1 870 858
- US-B1- 9 454 688
- KENG TAN ET AL: "Designing a Color Barcode for Mobile Applications", IEEE PERVASIVE COMPUTING, IEEE SERVICE CENTER, LOS ALAMITOS, CA, US, vol. 11, no. 2, 1 February 2012 (2012-02-01), pages 50 - 55, XP011442375, ISSN: 1536-1268, DOI: 10.1109/MPRV.2010.67

## Description

### Domaine Technique

L'invention se rapporte au domaine des codes graphiques et concerne plus particulièrement un code graphique capable de contenir une haute densité d'informations.

### Technique antérieure

De façon connue, les codes-barres (unidimensionnels) sont des codes graphiques se présentant sous la forme d'une série de barres et d'espaces dont l'épaisseur respective varie en fonction des données qui sont codées. Un code-barres est formé sur un support, généralement par un procédé d'impression, et permet de coder de façon relativement compacte des informations.

Les codes-barres sont destinés à être lus par un lecteur de code-barres doté d'un capteur optique. Les données codées dans un code-barres peuvent ainsi être acquises automatiquement à l'aide d'un lecteur de codes-barres.

Plus récemment, un nouveau type de code-barres - dit code-barres bidimensionnel ou code-barres 2D (code-barres à 2 dimensions) - a été développé. Un code-barres bidimensionnel est un code graphique ou pictogramme, constitués de petits carrés et de zones blanches. Il s'agit d'un format en deux dimensions du code-barres unidimensionnel, permettant ainsi une concentration plus importante d'informations dans un espace donné. De même que pour un code-barres unidimensionnel, le contenu d'un code-barres 2D, appelés parfois aussi code QR (pour « Quick Response Code »), est rapidement lisible au moyen d'un lecteur de code-barres approprié.

De manière générale, les codes-barres et autres pictogrammes équivalents sont des codes graphiques 2D (appelés plus simplement « codes graphiques »), c'est-à-dire des codes graphiques formés sur un support en 2 dimensions et configurés pour coder ou représenter une quantité plus ou moins importante d'informations.

Les codes-barres sont par exemple massivement utilisés aujourd'hui pour identifier les articles dans les magasins à travers le monde. Les codes-barres 2D (codes QR) connaissent aussi un usage croissant ces dernières années, par exemple pour identifier une page web ou une application, ou encore pour coder un titre de transport ou un ticket donnant accès un service donné. Le code-barres 2D est avantageux en ce qu'il peut être reconnu automatiquement par une application exécutée sur un terminal (téléphone portable de type « smartphone », tablette, webcam...) doté d'une caméra.

Un problème se pose cependant lors de la lecture de codes graphiques 2D, notamment lorsque ceux-ci présentent une densité de symboles relativement importante. La capacité d'un dispositif de lecture à lire un code graphique 2D et la qualité de cette lecture sont généralement fonction des conditions d'acquisition dans lesquelles la lecture est réalisée. Ces conditions résultent en particulier des caractéristiques du dispositif de lecture utilisé (configuration matérielle et logicielle) ainsi que des conditions d'éclairage ou d'exposition à la lumière du code graphique 2D considéré. Ainsi, la lecture d'un même code graphique 2D peut aboutir à des résultats très variables selon la configuration du dispositif de lecture ou selon les conditions d'éclairage dans lesquelles la lecture est réalisée. Selon les conditions d'éclairage (orientation du code la lumière par rapport au code graphique 2D, intensité de la lumière, caractéristiques du support sur lequel figure le code, etc.), un même dispositif de lecture pourra ainsi obtenir des résultats de lecture variables pour un même code graphique 2D.

Il existe donc un besoin pour une solution permettant une lecture plus fiable et plus précise de codes graphiques 2D, tels que des codes QR par exemple.

Parallèlement, il existe un besoin pour stocker toujours plus d'information dans de tels codes graphiques. Dans certaines situations, un code graphique traditionnel n'offre pas une capacité de stockage suffisante pour y coder toutes les informations nécessaires. Les codes graphiques conventionnels présentent des contraintes techniques qui limitent fortement la quantité d'informations que l'on peut y stocker. En particulier, les codes graphiques traditionnels se présentent généralement uniquement en noir et blanc.

En augmentant la densité d'un code graphique 2D noir et blanc, il est possible d'augmenter la quantité d'informations stockées mais cette densité est limitée par la capacité des dispositifs de lecture à lire les codes graphiques 2D en question. Les problèmes de fiabilité et de précision de lecture mentionnés ci-dessus jouent un rôle prépondérant dans ces limitations intrinsèques en termes de densité d'information que l'on peut aujourd'hui stocker dans un code graphique 2D.

Il a déjà été envisagé de réaliser des codes graphiques 2D couleur comportant des symboles de différentes couleurs. En principe, l'usage de la couleur permettrait d'augmenter la densité d'informations que l'on peut stocker, mais en pratique la déposante a constaté qu'il est très difficile d'obtenir une lecture fiable et précise de codes graphiques 2D couleurs. En raison des problèmes d'acquisition mentionnés ci-avant, les couleurs acquises en lecture tendent à varier sensiblement d'une acquisition à une autre. Les couleurs détectées dépendent notamment des caméras utilisées (le type des capteurs, etc.), des algorithmes de traitement utilisés (post-traitement), des conditions d'éclairage, et de tous autres paramètres constituant collectivement les conditions d'acquisition. Il est ainsi difficile d'obtenir des résultats d'acquisition uniformes d'un dispositif de lecture à un autre dans des conditions d'éclairage standard, de même que pour un même dispositif de lecture réalisant plusieurs acquisitions dans des conditions d'éclairage différentes.

Ce problème de manque de fiabilité et d'uniformité dans la lecture d'un code graphique 2D couleur est encore plus amplifié par le fait que les algorithmes de traitement implémentés notamment dans certains téléphones (smartphones) et appareils photos sont configurés aujourd'hui pour améliorer (ou du moins adapter) le rendu général des photographies réalisées, de sorte à obtenir un résultat visuel conforme aux attentes des utilisateurs, ce qui a pour conséquence de dénaturer les couleurs de ces codes graphiques.

Il existe donc un besoin pour une solution permettant de lire de façon fiable et précise un code graphique 2D, qu'il soit en couleur ou en noir et blanc, et ce quelles que soient les conditions d'acquisition dans lesquelles la lecture est réalisée. De plus, un besoin existe pour une solution permettant de lire des codes graphiques présentant une densité d'information élevée, en particulier des codes graphiques 2D couleurs.

De l'état de la technique antérieure, on connait également les documents US 9 454 688 et « Designing a Color Barcode for Mobile Applications » (KENG TAN et al, IEEE Pervasive Computing, Vol. 11, No. 2, 1er février 2012, pages 50 et 55) qui décrivent tous les deux des procédés de lecture de code-barres colorés.

### Exposé de l'invention

A cet effet, la présente invention concerne un procédé de lecture selon la revendication 1.

L'interpolation spatiale permet de produire une estimation de la couleur théoriquement observable dans les conditions d'acquisition courantes pour chaque couleur de la base de couleurs sur la surface du code graphique 2D, et en particulier dans les zones de données en fonction de la position desdites zones de données.

La présente invention permet de lire de façon fiable et précise un code graphique 2D, qu'il soit en couleur ou en noir et blanc, et ce qu'elles que soient les conditions d'acquisition dans lesquelles la lecture est réalisée. Grâce à l'interpolation spatiale réalisée à partir des couleurs observables mesurées dans les zones de calibration, il est possible d'obtenir des résultats de lecture fiables et uniformes pour un même code graphique 2D malgré les différences de configuration matérielle et/ou logicielle pouvant exister entre différents dispositifs de lecture utilisés (notamment au niveau du dispositif de prise de vue et de l'algorithme de traitement). Le caractère uniforme et répétitif des résultats de lecture est également assuré sous des conditions d'éclairage variables d'une opération de lecture à une autre. Une lecture fiable et précise peut également être réalisée même sous des conditions d'éclairage complexes lors d'une opération de lecture (par exemple lorsque l'éclairage auquel est exposé le code graphique 2D n'est pas homogène).

Il a en particulier été constaté qu'un éclairage hétérogène (causant par exemple des zones surexposées et/ou des zones sous-exposées en lumière) augmente significativement les risques d'erreurs lors de la lecture d'un code graphique 2D. L'invention permet de pallier ce problème en rendant les résultats de lecture indépendants de l'éclairage utilisé.

L'invention permet également de lire des informations stockées dans des codes graphiques couleurs (y compris des code graphiques avec de multiples niveaux de gris), en limitant les erreurs susceptibles de se produire en raison notamment de la ressemblance des couleurs de base utilisées (par exemple lorsque l'on utilise un grand nombre de couleurs de base) ou encore lorsque l'éclairage n'est pas homogène. Il est ainsi possible de stocker une plus grande quantité d'information dans une surface donnée.

En particulier, il a été constaté que les codes graphiques couleurs sont difficiles à lire en raison de la forte influence des conditions d'éclairage et de la configuration (matérielle et logicielle) du dispositif de lecture utilisé sur les couleurs lues dans ces codes graphiques. L'invention permet de pallier ces problèmes.

De plus, l'invention permet de sécuriser les informations stockées dans le code graphique 2D de l'invention. Sans connaître à l'avance la position des zones de calibrations et des zones de données dans un code graphique 2D de l'invention, il est difficile pour un tiers malveillant de lire les informations stockées dans ce code graphique.

Selon un mode de réalisation particulier, le procédé comprend en outre : détermination d'informations encodées dans le code graphique 2D à partir de la couleur réelle déterminée lors de ladite classification comme étant attribuée à chaque zone de données analysée.

Selon un mode de réalisation particulier, le procédé comprend en outre une détection des zones de calibration dans le code graphique 2D à partir des données d'image et à partir de données de position préalablement enregistrées qui comprennent les positions prédéfinies de chaque zone de calibration dans le code graphique 2D.

Selon un mode de réalisation particulier, le procédé comprend une consultation de données de calibration comprenant les données de position pour chaque zone de calibration en association avec la couleur de référence respective attribuée à ladite zone de calibration, la détection des zones de calibration et l'interpolation spatiale étant réalisées à partir des données de calibration.

Selon un mode de réalisation particulier, lors de l'interpolation spatiale, une estimation de la couleur théoriquement observable dans les conditions d'acquisition courantes pour chaque couleur de la base de couleurs est produite dans la position de chaque zone de données du code graphique 2D.

Selon un mode de réalisation particulier, l'interpolation spatiale est réalisée de sorte à attribuer, pour au moins une zone de données, des poids différents aux couleurs observables mesurées dans les zones de calibration en fonction de la distance séparant lesdites zones de calibration de ladite zone de données.

Selon un mode de réalisation particulier, lors de l'interpolation spatiale, l'estimation de la couleur théoriquement observable pour chaque couleur de la base de couleurs est adaptée dans chaque zone de données de sorte qu'un poids plus important est attribué à une couleur observable mesurée dans une première zone de calibration présentant une couleur de référence dans la base de couleurs par rapport à une couleur observable mesurée dans au moins une autre deuxième zone de calibration présentant ladite couleur de référence si ladite première zone de calibration est plus proche de ladite zone de données que ladite au moins une deuxième zone de calibration.

Selon un mode de réalisation particulier, ladite comparaison comprend : détermination d'un écart de couleur respectif entre la couleur observable mesurée dans ladite zone de données analysée et la couleur théoriquement observable estimée pour chaque couleur de la base de couleurs à la position de ladite zone de données analysée, dans lequel ladite couleur réelle déterminée en tant que couleur attribuée à ladite zone de données analysée est la couleur de la base de couleurs pour laquelle ledit écart est le plus faible.

Selon un mode de réalisation particulier, les zones de calibration sont réparties de manière uniforme sur toute la surface du code graphique 2D.

Selon un mode de réalisation particulier, les zones de calibration sont réparties de manière aléatoire sur la surface du code graphique 2D.

Selon un mode de réalisation particulier, lors de la classification, chaque zone de données est analysée pour en déterminer la couleur réelle attribuée dans la base de couleurs.

Selon un mode de réalisation particulier, le procédé comprend en outre :
- détection de zones d'aberration dans le code graphique 2D ;
- calcul de la position moyenne et de la variance de position des zones d'aberration dans le code graphique 2D ; et
- localisation d'une région d'aberration dans le code graphique 2D à partir de la position moyenne et de la variance de position ;
dans lequel l'interpolation spatiale comprend :
- vérification, pour chaque zone de données, si elle se trouve dans la région d'aberration ; et
- dans l'affirmative, l'interpolation spatiale est réalisée dans ladite zone de données de sorte à attribuer des poids plus importants aux couleurs observables mesurées dans les zones de calibration situées dans la région d'aberration qu'aux couleurs observables mesurées dans les zones de calibration situées hors de la région d'aberration.

Il est ainsi possible d'améliorer encore davantage les résultats de l'interpolation spatiale, et donc de la lecture du code graphique 2D dans son ensemble, en adaptant l'interpolation spatiale si une région d'aberration est détectée dans le code graphique 2D. Lors de l'interpolation spatiale, on peut donner plus d'importance aux couleurs observables des zones de calibration situées dans la région d'aberration (que celles positionnées en dehors) pour estimer, dans les zones de données situées dans la région d'aberration, la couleur théoriquement observable pour chacune des couleurs de base de la base de couleur.

Selon un mode de réalisation particulier, dans lequel les zones de données sont regroupées en trames d'au moins deux zones de données, les zones du code graphique 2D comprenant en outre des zones de vérification, au moins une zone de vérification étant associée à chacune desdites trames ;
dans lequel l'étape d'interpolation spatiale est appliquée aux zones de données et aux zones de vérification de sorte à produire une estimation de la couleur théoriquement observable dans les conditions d'acquisition courantes pour chaque couleur de la base de couleurs dans les positions des zones de données et des zones de vérification ;
dans lequel l'étape de classification est appliquée aux zones de données et aux zones de vérification de sorte à déterminer, à partir de l'interpolation spatiale, la couleur réelle attribuée aux zones de données et aux zones de vérification du code graphique 2D,
le procédé comprenant un processus itératif comprenant au cours d'au moins une itération courante :
   - vérification, pour chaque trame du code graphique 2D, de la validité des couleurs réelles déterminées lors de la précédente classification pour les zones de données de ladite trame, à partir de la couleur réelle déterminée lors de ladite précédente classification pour ladite au moins une zone de vérification de ladite trame ;
   - une mise à jour de l'interpolation spatiale en utilisant, en tant que zone de calibration, tout ou partie des zones des trames dont les couleurs des zones de données ont été déterminées comme étant valides lors de ladite vérification de l'itération courante ; et
   - une mise à jour de la classification pour déterminer, à partir du résultat de l'interpolation spatiale mise à jour, la couleur réelle attribuée aux zones de données et aux zones de vérification du code graphique 2D.

Il est ainsi possible d'améliorer encore la qualité et l'efficacité du procédé de lecture de l'invention, dans la mesure où les zones des trames déterminées comme étant valides peuvent être utilisées en tant que zone de calibration en plus des zones de calibration présentes par nature dans le code graphique 2D. L'utilisation de nouvelles zones du code graphique en tant que zones de calibration permet d'améliorer l'interpolation spatiale réalisée à chaque itération du processus itératif et donc de diminuer les erreurs susceptibles de se produire lors de la classification qui s'en suit.

L'invention permet ainsi de réaliser une lecture fiable et précise d'un code graphique 2D de haute densité, quelles que soient les conditions d'acquisition, avec une efficacité de traitement accrue et des résultats encore améliorés.

En outre, il est possible de limiter la portion du code graphique 2D réservée par configuration aux zones de calibration tout en maintenant de bonnes performances de lecture. En effet, les zones de calibration prédéfinies à l'origine dans le code graphique 2D permettent d'amorcer l'exécution du processus itératif. Une fois ce processus itératif enclenché, des zones de données ZD et des zones de vérification de trames valides peuvent être traitées comme des zones de calibration au cours de l'interpolation spatiale afin d'affiner progressivement les résultats.

Grâce à l'invention, on peut donc limiter l'espace réservé aux zones de calibration dans un code graphique 2D et ainsi augmenter la quantité d'information pouvant être stockée dans les zones de données tout en assurant des bonnes performances de lecture.

Selon un mode de réalisation particulier, la mise à jour de l'interpolation comprend :
- une réitération de l'interpolation spatiale en utilisant, en tant que zone de calibration, tout ou partie des zones des trames dont les couleurs des zones de données ont été déterminées comme étant valides lors de ladite vérification de l'itération courante, de sorte à mettre à jour l'estimation de la couleur théoriquement observable dans les conditions d'acquisition courantes pour chaque couleur de la base de couleurs sur la surface du code graphique 2D.

Selon un mode de réalisation particulier, la mise à jour de la classification comprend :
- une réitération de la classification pour déterminer, à partir du résultat de l'interpolation de l'itération courante, la couleur réelle attribuée aux zones de données et aux zones de vérification.

Selon un mode de réalisation particulier, au cours de la vérification, la validité de chaque trame est vérifiée en réalisant un calcul d'intégrité sur les couleurs réelles déterminées lors de ladite précédente classification pour les zones de données de la trame et en comparant le résultat dudit calcul d'intégrité avec la couleur réelle déterminée lors de ladite précédente classification pour ladite au moins une zone de vérification de ladite trame.

Selon un mode de réalisation particulier, lors de la mise à jour de l'interpolation spatiale, au moins les zones de données de chaque trame dont les couleurs des zones de données ont été déterminées comme étant valides lors de ladite vérification sont prises en compte en tant que zones de calibration lors de la mise à jour de l'interpolation spatiale.

Selon un mode de réalisation particulier, dans lequel, lors de la mise à jour de l'interpolation, chaque zone de données ainsi que ladite au moins une zone de vérification associée de chaque trame dont les couleurs des zones de données ont été déterminées comme étant valides lors de ladite vérification sont prises en compte en tant que zones de calibration lors de la mise à jour de l'interpolation spatiale.

Selon un mode de réalisation particulier, lors de la mise à jour de l'interpolation spatiale, les zones de chaque trame dont les couleurs réelles ont été déterminées comme étant invalides lors de la précédente classification sont exclues des zones prises en compte en tant que zone de calibration.

Selon un mode de réalisation particulier, dans lequel lors de la mise à jour de la classification, la couleur réelle déterminée comme étant attribuée à au moins une zone de données est corrigée à partir de ladite au moins une zone de vérification associée à la trame de ladite zone de données.

Selon un mode de réalisation particulier, dans lequel lors d'une itération courante du processus itératif, la validité des couleurs déterminées lors de la précédente classification pour les zones de données de chaque trame du code graphique 2D est vérifiée, avant de réaliser la mise à jour de l'interpolation spatiale à partir du résultat de l'interpolation spatiale mise à jour.

Selon un mode de réalisation particulier, dans lequel le procédé comprend une pluralité d'itérations du processus itératif, ledit processus itératif étant répété jusqu'à ce que toutes les trames du code graphique 2D soient déterminées comme étant valides lors de ladite vérification d'une itération courante,
les couleurs réelles de chaque zone de données et chaque zone de vérification étant celles déterminées lors de la mise à jour de la classification de la dernière itération.

Dans un mode particulier de réalisation, les différentes étapes du procédé de lecture sont déterminées par des instructions de programmes d'ordinateurs.

En conséquence, l'invention vise aussi un programme d'ordinateur sur un support d'informations (ou support d'enregistrement), ce programme étant susceptible d'être mis en oeuvre dans un dispositif de lecture ou plus généralement dans un ordinateur, ce programme comportant des instructions adaptées à la mise en oeuvre des étapes d'un procédé de lecture tel que défini dans ce document.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un dispositif de lecture selon la revendication 19.

L'interpolation spatiale permet de produire une estimation de la couleur théoriquement observable dans les conditions d'acquisition courantes pour chaque couleur de la base de couleurs sur la surface du code graphique 2D, et en particulier dans les zones de données en fonction de la position desdites zones de données.

A noter que les différents modes de réalisation mentionnés dans ce document en relation avec le procédé de lecture de l'invention ainsi que les avantages associés s'appliquent de façon analogue au dispositif de lecture de l'invention.

Pour chaque étape du procédé de lecture tel que défini dans ce document, le dispositif de lecture de l'invention peut comprendre un module correspondant configuré pour réaliser ladite étape.

Selon un mode de réalisation particulier, l'invention est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit dans ce document pour le module concerné. Un tel composant logiciel peut être exécuté par un processeur d'une entité physique (terminal, serveur, etc.).

De même, un composant matériel correspond à tout élément d'un ensemble matériel (ou hardware) configuré pour mettre en oeuvre une fonction ou un ensemble de fonctions, selon ce qui est décrit dans ce document pour le module concerné. Il peut s'agir d'un composant matériel programmable ou avec processeur intégré pour l'exécution de logiciel, par exemple un circuit intégré, une carte à puce, une carte à mémoire, etc.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement un code graphique 2D selon un mode de réalisation particulier de l'invention ;
[Fig. 2] La figure 2 représente schématiquement la structure d'un dispositif de lecture selon un mode de réalisation particulier de l'invention ;
[Fig. 3] La figure 3 représente schématiquement les modules mis en oeuvre dans un dispositif de lecture, selon un mode de réalisation particulier de l'invention ;
[Fig. 4] La figure 4 est un diagramme représentant schématiquement les étapes réalisées par un dispositif de lecture pour mettre en oeuvre un procédé de lecture selon un mode de réalisation particulier de l'invention, en vue par exemple de lire un code graphique 2D tel qu'illustré en figure 1 ;
[Fig. 5] La figure 5 illustre schématiquement les étapes du procédé de lecture représenté en figure 4, selon un mode de réalisation particulier de l'invention ;
[Fig. 6] La figure 6 est un diagramme représentant schématiquement les étapes réalisées par un dispositif de lecture pour mettre en oeuvre un procédé de lecture, selon un mode de réalisation particulier de l'invention ;
[Fig. 7A-7B] Les figures 7A et 7B représentent un code graphique 2D de l'invention placé respectivement dans des conditions d'éclairage homogènes et dans des conditions d'éclairage hétérogènes ;
[Fig. 8A-8B] Les figures 8A et 8B représentent des zones d'aberration détectées dans un code graphique 2D de l'invention placé respectivement dans des conditions d'éclairage homogènes et dans des conditions d'éclairage hétérogènes, selon des exemples particuliers ;
[Fig. 9] La figure 9 représente schématiquement la répartition des zones d'aberration dans des conditions d'éclairage homogènes et dans des conditions d'éclairage hétérogènes, selon des exemples particuliers ;
[Fig. 10] La figure 10 représente schématiquement un code graphique 2D selon un mode de réalisation particulier de l'invention ;
[Fig. 11] La figure 11 est un diagramme représentant schématiquement les étapes réalisées par un dispositif de lecture pour mettre en oeuvre un procédé de lecture selon un mode de réalisation particulier de l'invention, en vue par exemple de lire un code graphique 2D tel qu'illustré en figure 10 ; et
[Fig. 12] La figure 12 illustre schématiquement les étapes du procédé de lecture représenté en figure 11, selon un mode de réalisation particulier de l'invention.

### Description détaillée de modes de réalisation

Comme indiqué précédemment, l'invention concerne un procédé de lecture d'un code graphique 2D, appelé aussi code graphique, de sorte à permettre la lecture fiable et précise d'informations codées dans le code graphique 2D considéré.

Dans ce document, l'expression « code graphique 2D » (ou plus simplement « code graphique ») désigne un quelconque code graphique (ou représentation graphique) formé en 2 dimensions sur un support, sous la forme d'un arrangement de pixels, symboles ou de quelconques motifs graphiques. Cet arrangement graphique permet de stocker ou représenter des données que l'on peut par la suite lire optiquement par un procédé de lecture approprié. Un code graphique 2D peut comprendre des symboles, caractères, pixels ou de quelconques motifs graphiques aptes à représenter des informations. Un code graphique 2D peut par exemple être un code-barres 2D (ou code QR) comme déjà mentionné ou un quelconque pictogramme.

L'invention, selon différents modes de réalisation, met en oeuvre un procédé de lecture, dans un dispositif de lecture, pour lire un code graphique 2D comprenant une pluralité de zones présentant chacune une couleur réelle qui lui est attribuée dans une base de N couleurs distinctes. On considère de manière générale que N étant un entier tel que N ≥ 2. Les zones du code graphique 2D comprennent : des zones de données encodant des informations à partir des couleurs réelles desdites zones de données ; et au moins 2N zones de calibration à des positions prédéfinies dans le code graphique 2D, la couleur réelle de chaque zone de calibration étant une couleur de référence prédéfinie dans ladite base de couleurs. Le code graphique 2D comprend par exemple au moins deux zones de calibration pour chaque couleur de la base de couleurs.

Le procédé de lecture comprend les étapes suivantes : acquisition optique du code graphique 2D dans des conditions d'acquisition courantes pour obtenir des données d'image ; mesure, à partir des données d'image, de la couleur observable dans les zones de calibration dans les conditions d'acquisition courantes ; interpolation spatiale, à partir des couleurs observables mesurées dans les zones de calibration et des positions prédéfinies desdites zones de calibration, pour produire une estimation de la couleur théoriquement observable dans les conditions d'acquisition courantes pour chaque couleur de la base de couleurs sur la surface du code graphique 2D (en particulier dans les zones de données en fonction de la position desdites zones de données); et classification à partir du résultat de l'interpolation spatiale pour déterminer la couleur réelle attribuée à au moins une zone de données analysée.

La classification peut comprendre pour chaque zone de données analysée : une comparaison de la couleur observable mesurée dans ladite zone de données analysée avec la couleur théoriquement observable estimée pour chaque couleur de la base de couleurs à la position de ladite zone de données analysée ; et une détermination, en tant que couleur réelle de ladite zone de données analysée, de la couleur de la base de couleurs pour laquelle la couleur théoriquement observable estimée à la position de ladite zone de données analysée est la plus proche de la couleur observable mesurée dans ladite zone de données analysée.

Il est ainsi possible de lire de façon fiable et précise un code graphique 2D, qu'il soit en couleur ou en noir et blanc.

L'invention vise également un dispositif de lecture configuré pour mettre en oeuvre le procédé de lecture de l'invention, ainsi que le programme d'ordinateur correspondant stocké dans un support d'informations.

D'autres aspects et avantages de la présente invention ressortiront des exemples de réalisation décrits ci-dessous en référence aux dessins mentionnés ci-avant.

Des exemples de mise en oeuvre de l'invention sont décrits ci-après dans le cadre de la formation d'un code graphique 2D comprenant une pluralité de zones (appelé aussi pixels). Dans ce document, le terme « zone » (ou pixel) désigne un quelconque motif graphique élémentaire pouvant être formé, par impression ou tout autre procédé, sur un support. Chaque zone peut être de forme quelconque et peut appartenir à un groupe de zones dont l'arrangement est quelconque. Les zones ou pixels peuvent être arrangés par exemple sous la forme d'une matrice de zones ou pixels, de type orthogonale ou non. Une zone ou pixel peut comporter une pluralité de sous-zones ou sous-pixels.

Dans le présent document, des exemples de mise en oeuvre de l'invention sont décrits dans le cadre d'un code graphique 2D de forme carrée ou rectangulaire, et présentant des zones également carrées ou rectangulaires. Ces zones sont disposées selon une matrice orthogonale. A noter toutefois que le nombre, la forme et la disposition des zones, ainsi que la configuration géométrique générale du code graphique 2D peuvent être adaptés au cas par cas, d'autres exemples de réalisation étant possibles.

Dans les exemples de réalisation qui suivent, chaque zone (ou pixel) d'un code graphique 2D présente une couleur réelle (ou couleur physique) qui lui est attribuée, c'est-à-dire une couleur qu'elle porte réellement physiquement (une couleur unique qui lui est propre). La couleur réelle d'une zone d'un code graphique 2D est intrinsèque à ladite zone et est donc indépendante des conditions d'acquisition dans lesquelles cette couleur peut éventuellement être lue.

A noter que l'invention s'applique notamment aux codes graphiques 2D avec de multiples niveaux de gris, c'est-à-dire des codes graphiques 2D dont les zones présentent chacune un niveau de gris choisi parmi une base d'une pluralité de niveaux gris distincts. Aussi, dans le présent document, la notion de couleur couvre également les niveaux de gris. Ainsi, une base de N niveaux de gris peut être utilisée comme une base de couleurs BS1 dans les exemples de réalisation décrits ci-après.

Comme déjà discuté ci-avant, lorsqu'un code graphique 2D est lue par un dispositif de lecture approprié, les couleurs de chaque zone du code graphique 2D peuvent être lues pour en déduire une information. Un dispositif de lecture permet de lire (ou de faire l'acquisition) des couleurs observables des zones d'un code graphique 2D dans des conditions d'acquisition courantes. Ces conditions d'acquisition courantes sont fonction notamment des configurations matérielles et logicielles du dispositif de lecture utilisé ainsi que des conditions d'éclairage dans lesquelles le code graphique 2D est lue. En raison des variations de mesure liées aux conditions d'acquisition courantes, les couleurs observables des zones d'un code graphiques 2D - c'est-à-dire les couleurs effectivement détectées lors de la lecture - peuvent différer plus ou moins par rapport aux couleurs réelles des zones. Ainsi, alors qu'une zone présente par exemple une couleur réelle rouge, un dispositif de lecture peut mesurer une couleur plus ou moins claire, voire même du rose, de l'orange, du magenta, etc.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

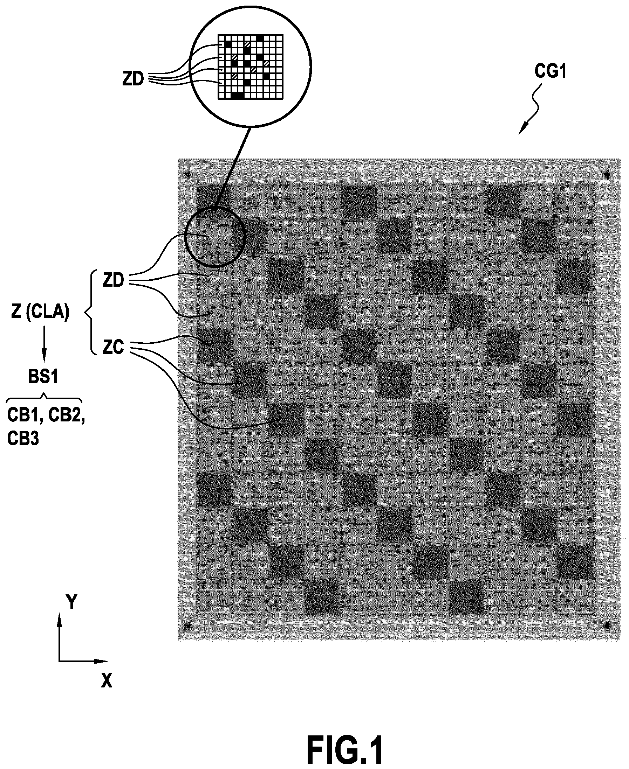

La **figure 1** représente schématiquement un code graphique 2D - noté CG1 - selon un mode de réalisation particulier de l'invention. Dans cet exemple, le code graphique CG1 une pluralité de zones Z présentant chacune une couleur réelle CLA qui lui est attribuée dans une base de couleur BS1 de N couleur de base distinctes (N étant un entier positif). Chaque zone Z comporte une unique couleur réelle CLA qui peut être lue et évaluée par un dispositif de lecture approprié.

De façon générale, on considère que le nombre entier N est tel que N ≥ 2. Selon un exemple particulier, N ≥ 3. Comme indiqué par la suite, la base de couleurs BS1 utilisée peut varier selon le cas. En particulier, le nombre et la nature des couleurs de base composant cette base de couleur BS1 peuvent être adaptés au cas par cas. Cette base de couleur BS1 peut comprend par exemple seulement deux couleurs de base quelconques, par exemple noir et blanc (ou bleu et rouge, etc.). Selon un autre exemple, la base de couleur BS1 comprend au moins 3 couleurs de base distinctes (par exemple bleu, vert et rouge).

On suppose par exemple dans cet exemple que chaque zone Z du code graphique CG1 présente une couleur réelle CLA dans la base de couleur BS1 qui se compose de 3 couleurs de base distinctes notées CB1, CB2 et CB3 **(****figure 1****).** D'autres exemples sont bien entendu possibles. En particulier, l'invention peut être appliquée avec un base de couleur BS1 comprenant par exemple 32, 64, 128 couleurs de base distinctes, ou plus, selon la densité d'informations que l'on souhaite stocker dans le code graphique CG1. Plus le nombre de couleurs de base distinctes dans la base BS1 est important, plus il est possible de stocker de données dans une même surface du code graphique mais plus la lecture peut s'avérer difficile (l'écart entre les couleurs de base est faible). Par souci de simplicité, on considère ici le cas d'une base de 3 couleurs de base (par exemple rouge, vert et bleu), étant entendu que le principe de l'invention décrit ici s'applique à toutes base BS1 de 2 couleurs, 3 couleurs et plus.

Le code graphique CG1 comprend différentes types de zone Z. Comme représenté en **figure 1****,** le code graphique CG1 comprend des zones de données ZD encodant des informations à partir des couleurs réelles CLA desdites zones de données. En outre, le code graphique CG1 comprend au moins 2N zones de calibration (ou zones de référence) ZC à des positions prédéfinies dans le code graphique CG1, la couleur réelle CLA de chaque zone de calibration ZC étant une couleur de référence prédéfinie dans la base de couleurs BS1. Dans l'exemple considéré ici, le code graphique CG1 comprend au moins 2 zones de calibration ZC pour chaque couleur (CB1-CB3) de la base de couleurs BS1, c'est-à-dire au moins 2 zones de calibration ZC présentant la couleur de base CB1, au moins 2 zones de calibration ZC présentant la couleur de base CB2 et au moins 2 zones de calibration ZC présentant la couleur de base CB3 (soit au total au moins 2*3=6 zones de calibration ZC distinctes dans cet exemple).

Dans cet exemple, la taille des zones de données ZD est plus faible que celle des zones de calibration ZC, bien que d'autres exemples soient possibles. Les zones de données ZD sont disposée en groupes de zones de données, chaque groupe formant ensemble une région de même taille et forme qu'une zone de calibration ZC. La taille et la configuration des zones de données ZD et des zones de calibration ZC peuvent toutefois être adaptées selon le cas.

Comme décrit par la suite, les zones de données ZD du code graphique CG1 portent l'information utile du code graphique, à savoir l'information que l'on souhaite coder dans le code graphique de sorte à pouvoir être lue et interprétée ultérieurement au moyen d'un dispositif de lecture. Par ailleurs, les zones de calibration ZC sont disposées à des positions prédéfinies et présentent également des couleurs réelles (dite couleurs de référence) qui sont connues à l'avance. Ces zones de calibration ZC permettent d'améliorer la lecture par un dispositif de lecture des zones de données ZD du code graphique CG1.

Comme décrit par la suite, les zones de calibration ZC peuvent être réparties de manière uniforme sur toute la surface du code graphique CG1. En variante, les zones de calibration ZC peuvent être réparties de façon aléatoire sur la surface du code graphique 2D. Des exemples de configurations particulières seront décrits ultérieurement.

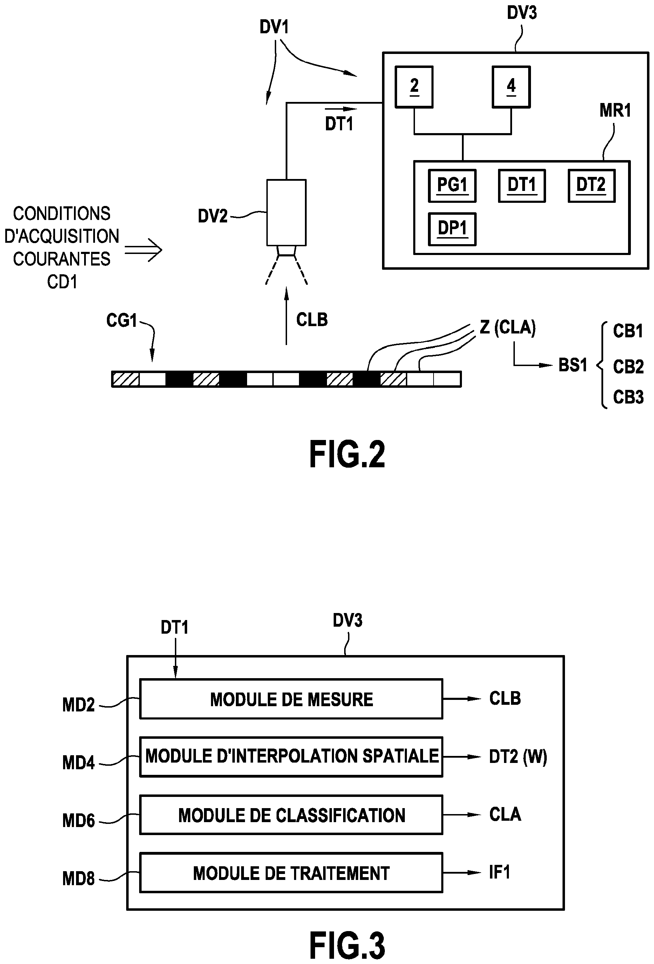

La **figure 2** représente un dispositif (ou système) de lecture DV1 conforme à un mode réalisation particulier de l'invention. Le dispositif de lecture DV1 est configuré pour lire un code graphique 2D tel que le code graphique CG1, en mettant en œuvre le procédé de lecture selon un mode de réalisation particulier de l'invention.

Le dispositif de lecture DV1 comprend un dispositif d'acquisition optique DV2 (ou dispositif de prise de vue) ainsi qu'une unité de traitement DV3. Le dispositif d'acquisition optique DV2 peut comprendre une caméra ou tous autres appareils capables de réaliser l'acquisition optique d'un code graphique tel que le code graphique CG1.

Le dispositif d'acquisition optique DV2 est configuré pour faire l'acquisition optique du code graphique CG1 dans des conditions d'acquisition courantes CF1 pour obtenir des données d'image DT1. En particulier, lors de la lecture, le dispositif d'acquisition optique DV2 collecte de la lumière représentative des couleurs CLB qui sont effectivement observables dans les différentes zones Z du code graphique CG1 dans des conditions d'acquisition courantes notées CD1. L'unité de traitement DV3 est configurée pour traiter les données d'image DT1 générées par le dispositif d'acquisition optique DV1 lors d'une acquisition optique, afin de lire le code graphique CG1 considéré.

Le dispositif d'acquisition optique DV2 et l'unité de traitement DV3 peuvent constituer deux entités distinctes aptes à coopérer ensemble pour réaliser le procédé de lecture de l'invention. Alternativement, le dispositif d'acquisition DV2 et l'unité de traitement DV3 peuvent être intégrés en un seul et même dispositif DV1. Dans les exemples qui suivent, on suppose que l'unité de traitement DV3 contrôle le dispositif de lecture DV2.

Les conditions d'acquisition courante CD1 dépendent en particulier des conditions d'éclairage dans lesquelles la prise de vue du code graphique CG1 est réalisée ainsi que de la configuration (matérielle et logicielle) de l'unité de traitement DV3. D'autres paramètres d'acquisition peuvent toutefois influer les conditions d'acquisition courantes CD1. On comprend que les conditions d'acquisition CD1 peuvent varier d'une prise de vue à une autre, notamment en raison de variations des conditions d'éclairage dans lesquelles des lectures de code graphique sont réalisées. De même, des modifications matérielles et/ou logicielles de l'unité de traitement DV3 (par exemple suite à une mise à jour logicielle) peuvent impacter les conditions d'acquisition CD1.

L'unité de traitement DV3 comprend dans cet exemple un processeur (ou contrôleur) 2, une mémoire volatile (RAM) 4 et une mémoire non volatile MR1. L'unité de traitement DV3 peut être un ordinateur ou prendre toutes autres formes appropriées.

Dans cet exemple, la mémoire MR1 est une mémoire non volatile réinscriptible ou une mémoire morte (ROM).

La mémoire MR1 est une mémoire non volatile réinscriptible (EEPROM, Flash, etc.) ou une mémoire morte (ROM), cette mémoire constituant un support d'enregistrement (ou support d'informations) conforme à un mode de réalisation particulier, lisible par l'unité d et traitement (et plus généralement par le dispositif de lecture DV1), et sur lequel est enregistré un programme d'ordinateur PG1 conforme à un mode de réalisation particulier. Ce programme d'ordinateur PG1 comporte des instructions pour l'exécution des étapes d'un procédé de lecture selon un mode de réalisation particulier. Le processeur peut utiliser la mémoire volatile 4 pour exécuter des instructions définies dans le programme d'ordinateur PG1 stocké dans la mémoire MR1.

La mémoire MR1 peut notamment être utilisée pour stocker des données de position DP1, des données d'image DT1 générées par le dispositif d'acquisition optique DV2 ainsi que des données d'interpolation DT2. La nature et l'usage de ces données seront décrits plus en détail ultérieurement.

Le processeur 2 piloté par le programme d'ordinateur PG1, met ici en œuvre un certain nombre de modules représentés en **figure 3****,** à savoir : un module de mesure MD2, un module d'interpolation spatiale MD4, un module de classification MD6 et un module de traitement MD8.

Le mode de mesure MD2 est configuré pour mesurer, à partir des données d'image DT1 générées par le dispositif d'acquisition optique DV2, la couleur observable CLB dans les zones de calibration ZC dans les conditions d'acquisition courantes CD1.

Le module d'interpolation spatiale (ou module d'interpolation) MD4 est configuré pour produire, à partir des couleurs observables CLB mesurées dans les zones de calibration ZC et des positions prédéfinies des zones de calibration ZC, une estimation (une interpolation spatiale) de la couleur théoriquement observable CLC dans les conditions d'acquisition courantes CD1 pour chaque couleur de la base de couleurs BS1 sur la surface du code graphique CG1 (en particulier dans les zones de données en fonction de la position des zones de données ZD dans le code graphique 2D).

Comme décrit plus en détails ci-après, une couleur théoriquement observable CLC au sens de l'invention est une couleur qui n'a pas été effectivement mesurée par le dispositif de lecture DV1 dans une zone Z du code graphique CG1 mais une couleur que le dispositif de lecture DV1 devrait théoriquement observer, selon les résultats de l'interpolation spatiale, si une couleur correspondante (parmi CB1-CB3) de la base de couleurs BS1 était réellement attribuée dans cette zone du code graphique CG1. Pour chaque couleur CB1-CB3 de la base de couleur BS1, une couleur théoriquement observable CLC peut être évaluée par interpolation spatiale dans les zones de données ZC du code graphique CG1 (en fonction de la position desdites zones de données ZD), à partir des couleurs observables CLB effectivement mesurées dans les zones de calibration ZC.

Le module de classification MD6 est configuré pour déterminer, à partir du résultat de l'interpolation spatiale réalisée par le module d'interpolation MD4, la couleur réelle CLA attribuée à au moins une zone de données ZD analysée. Pour chaque zone de données ZD analysée, le module de classification MD6 peut être configuré pour :
- comparer la couleur observable CLB mesurée dans ladite zone de données ZC analysée avec la couleur théoriquement observable CLC estimée pour chaque couleur CB1-CB3 de la base de couleurs BS1 à la position de ladite zone de données ZD analysée ; et
- déterminer, en tant que couleur réelle CLA de ladite zone de données ZD analysée, la couleur de la base de couleurs BS1 pour laquelle la couleur théoriquement observable CLC estimée à la position de ladite zone de données ZD analysée est la plus proche de la couleur observable CLB mesurée dans ladite zone de données ZD analysée.

L'unité de traitement DV3 peut éventuellement aussi comprendre un module d'acquisition configurer pour contrôler le dispositif d'acquisition optique DV2 de sorte à ce que ce dernier fasse l'acquisition optique du code graphique CG1 dans des conditions d'acquisition courantes CD1 pour obtenir des données d'image DT1.

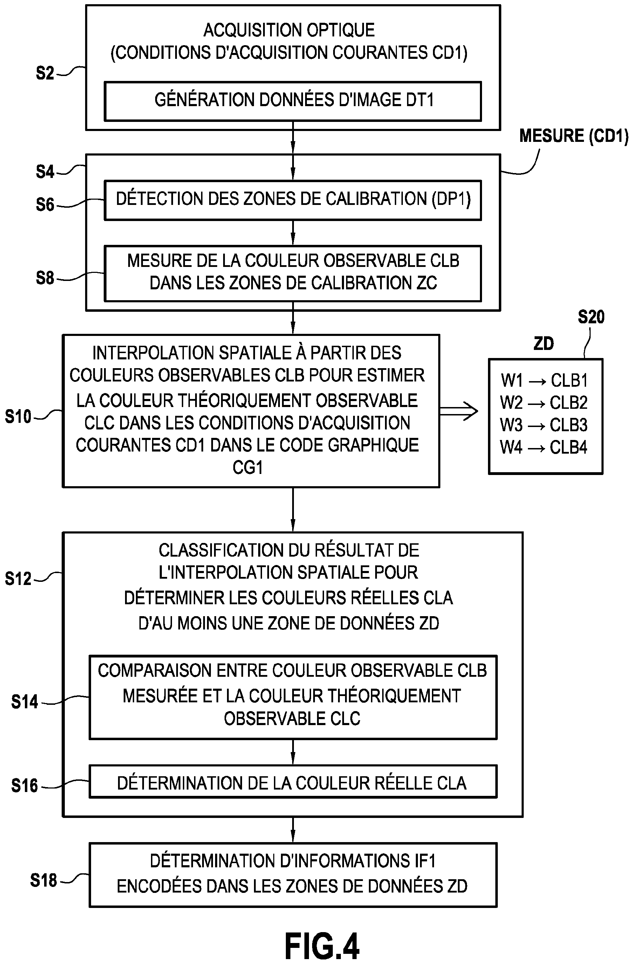

La configuration et le fonctionnement des modules MD2-MD8 de l'unité de traitement DV3 apparaîtront plus précisément dans les exemples de réalisation décrits ci-après en référence aux **figures 4-11****.** A noter que les modules MD2-MD8 tels que représentés en **figure 3** ne représentent qu'un exemple de mise en œuvre non limitatif de l'invention.

De manière générale, pour chaque étape du procédé de lecture de l'invention, le dispositif de lecture de l'invention peut comprendre un module correspondant configuré pour réaliser ladite étape.

Un mode de réalisation particulier est à présent décrit en référence aux **figures 4-5****.** On suppose que le dispositif de lecture DV1 précédemment décrit **(****figures 2-3****)** est utilisé pour lire le code graphique CG1 représenté en **figure 1****.** Pour ce faire, l'unité de traitement DV3 met en œuvre un procédé de lecture en exécutant le programme d'ordinateur PG1.

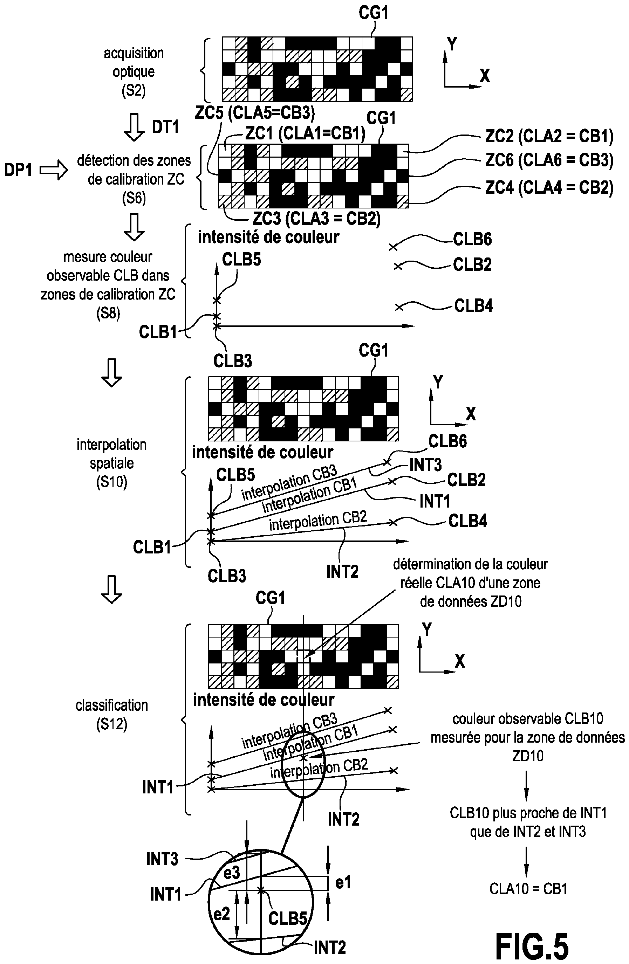

La **figure 5** illustre en particulier les étapes du procédé de lecture représentées en **figure 4****,** selon un exemple particulier. Dans la **figure 5****,** une portion du code graphique CG1 est représenté schématiquement à titre purement illustratif, afin d'illustrer le concept de l'invention mis en œuvre dans le cas particulier du procédé représenté en **figure 4****.** Comme déjà indiqué, la configuration des zones Z (y compris les zones de calibration ZC et les zones de données ZD) en termes notamment de nombre, taille, forme, etc. peut être adapté par l'homme du métier au cas par cas.

Au cours d'une étape S2 d'acquisition optique **(****figures 4-5****),** le dispositif d'acquisition optique DV2 fait l'acquisition optique du code graphique CG1 dans des conditions d'acquisition courantes CD1 pour obtenir des données d'image DT1. Le dispositif d'acquisition optique DV2 génère ainsi les données d'image DT1 qui sont collectées par l'unité de traitement DV3. Dans cet exemple, les données d'image DT1 sont en particulier représentatives des couleurs observables CLB par le dispositif de lecture DV1 dans chaque zone Z du code graphique CG1 dans les conditions d'acquisition courante CD1. Lors de cette étape S2 d'acquisition, le dispositif d'acquisition DV2 comprend par exemple une caméra, un appareil photo ou autre, qui réalise une ou des prises de vue de la surface du code graphique CG1.

Au cours d'une étape S4 de mesure **(****figures 4-5****),** l'unité de traitement DV3 mesure ensuite, à partir des données d'image DT1, la couleur observable CLB dans les zones de calibration ZC dans les conditions d'acquisition courantes CD1. L'unité de traitement DV3 peut mesurer la couleur observable CLB dans toutes les zones de calibration ZC du code graphique CG1, ou dans un sous-groupe de zones de calibration ZC parmi toutes les zones de calibration ZC présentes dans le code graphique CG1.

Dans l'exemple considéré ici, lors de l'étape S4 de mesure, l'unité de traitement DV3 mesure, à partir des données d'image DT1, la couleur observable CLB dans toutes les zones Z du code graphique CG1, y compris dans les zones de calibration ZC et dans les zones de données ZD. Comme cela apparaîtra ci-après, il n'est toutefois pas obligatoire de mesurer la couleur observable CLB dans chaque zone de données, selon les positions où l'on souhaite lire des informations dans le code graphique CG1. En variante, il est possible de ne mesurer la couleur observable CLB que dans une sous-partie des zones de données ZD présentes dans le code graphique CG1.

La mesure d'une couleur dans une zone Z du code graphique CG1 se traduit par la détermination de valeurs d'intensité de couleur représentatives de la couleur observable CLB qui est effectivement mesurée dans une zone Z considérée dans les conditions d'acquisition courantes CD1. Chaque couleur CLB mesurée dans une zone Z peut ainsi être représentée dans cet exemple par des intensités de couleur respectives (par un n-uplet d'intensités où n est un nombre naturel au moins égal à 1, par exemple un triplet avec n=3 ou quadruplet avec n=4) dans une base colorimétrique de référence qui peut être choisie par l'homme du métier au cas par cas (par exemple la base « RGB » pour rouge-vert-bleue avec n=3, la base CMYK avec n=4, la base de niveau de gris avec n=1, etc.). Le n-uplet est la représentation (les coordonnées) de la couleur observable CLB dans la base colorimétrique de référence. Par exemple, chaque couleur CLB mesurée peut être représentée par un triplet d'intensités de couleur rouge-vert-bleu dans le cas où la base colorimétrique de référence utilisée est rouge-vert-bleu.

Comme déjà indiqué, chaque zone de calibration ZC comporte une unique couleur de référence CLA qui est prédéfinie parmi les couleurs de base CB1-CB3 de la base de couleur BS1. Lors de la mesure S4, l'unité de traitement DV3 mesure de préférence la couleur observable CLB dans un groupe de zones de calibration ZC comprenant au moins deux zones de calibration ZC présentant respectivement chacune des couleurs de base CB1-CB3 de la base de couleur BS1 (au moins deux zones de calibration ZC présentant la couleur de base CB1, CB2 et CB3 respectivement), afin de permettre la réalisation d'une interpolation spatiale dans toutes les couleurs de la base de couleurs BS1 lors de l'étape S10 qui suit.

Lors de l'étape de mesure S4, l'unité de traitement DV3 peut réaliser divers traitements permettant la mesure des couleurs observables CLB dans les zones de calibration ZC. Par exemple, l'unité de traitement DV3 peut réaliser un traitement pour détecter le code graphique CG1 (recadrage, etc.) et traiter les données d'image DT1 pour préparer la mesure S4 (correction de perspective, normalisation de la taille, segmentation du code graphique CG1, etc.). On suppose que l'unité de traitement DV3 est préconfigurée pour reconnaître les positions des différentes zones Z (et notamment des zones de calibration ZC) du code graphique CG1 à partir des données d'image DT1 reçues.

Lors du traitement des données d'image DT1, l'unité de traitement DV3 peut ainsi détecter (S6, **figures 4-5****)** les zones de calibration ZC dans le code graphique CG1 à partir des données d'image DT1 et à partir de données de position DP1 préalablement enregistrées (dans la mémoire MR1 dans cet exemple). L'unité de traitement DV3 peut ensuite mesurer (S8, **figures 4-5****)** la couleur observable CLB dans les zones de calibration ZC. Ces données de position DP1 déjà mentionnées ci-avant comprennent les positions prédéfinies de chaque zone de calibration ZC dans le code graphique 2D. Ces données de position DP1 peuvent se présenter sous un format quelconque. Elles comprennent par exemples des coordonnées de chaque zone Z (y compris des zones de calibration ZC) du code graphique GC1.

Dans l'exemple représenté en **figure 5****,** l'unité de traitement DV3 détecte ainsi deux zones de calibration ZC1 et ZC2 dont les couleurs réelles notées respectivement CLA1 et CLA2 sont la couleur de base CB1, deux zones de calibration ZC3 et ZC4 dont les couleurs réelles notées respectivement CLA3 et CLA4 sont la couleur de base CB2 et deux zones de calibration ZC5 et ZC6 dont les couleurs réelles notées respectivement CLA5 et CLA6 sont la couleur de base CB3. Par souci de simplicité, on considère ici un cas minimal où seules deux zones de calibration ZC se voient attribuées respectivement chacune des couleurs de base de la base de couleurs BS1. On comprend toutefois qu'il est possible de prédéfinir un nombre plus important de zones de calibration ZC pour chacune des couleurs de base de la base de couleur considérée.

Au cours d'une étape S10 **(****figures 4-5****)** d'interpolation spatiale, l'unité de traitement DV3 réalise une interpolation spatiale, à partir des couleurs observables CLB mesurées dans les zones de calibration ZC et des positions prédéfinies des zones de calibration ZC, pour produire une estimation de la couleur théoriquement observable CLC dans les conditions d'acquisition courantes CD1 pour chaque couleur (CB1-CB3) de la base de couleurs BS1 sur la surface du code graphique CG1, plus particulièrement dans les zones de données ZD. Cette interpolation spatiale permet d'estimer la couleur théoriquement observable CLC pour chaque couleur de base dans les zones de données ZD en fonction de la position respective des zones de données ZD dans le code graphique 2D CG1.

L'unité de traitement DV3 connaît à l'avance les couleurs réelles CLA qui sont attribuées à chaque zone de calibration ZC du code graphique CG1. Pour ce faire, l'unité de traitement DV3 consulte par exemple des données de calibration préenregistrées qui définissent la couleur réelle CLA respective attribuée à chaque zone de calibration ZC du code graphique GC1. Ainsi, l'unité de traitement DV3 peut associer chaque couleur observable CLB mesurée en S4 à une couleur correspondante (CB1-CB3) de la base de couleur BS1. Selon un exemple particulier, les données de calibration comprennent les données de position DP1 pour chaque zone de calibration ZC en association avec la couleur de référence attribuée à la zone de calibration considérée, l'interpolation S10 spatiale étant réalisée à partir de ces données de calibration.

L'unité de traitement DV3 peut ainsi déterminer en S10 comment doit théoriquement apparaître, dans les conditions d'acquisition courantes CD1, chaque couleur de base de la base de couleurs BS1 dans les positions des zones de données ZD du code graphique CG1 (en fonction de ladite position des zones de données ZD). Pour chaque couleur de base (CB1-CB3) de la base de couleurs BS1, l'unité de traitement DV3 évalue par interpolation spatiale à partir des couleurs observables CLB mesurée en S4 pour ladite couleur de base dans les zones de calibration ZC, comment cette couleur de base apparaît théoriquement - toujours dans les conditions d'acquisition courantes CD1 - dans les positions des zones de données ZD.

Comme illustré en **figure 5****,** on suppose donc ici que l'unité de traitement DV3 réalise une interpolation spatiale pour estimer respectivement la couleur théoriquement observable CLC dans les conditions d'acquisition courantes CD1 pour chaque couleur de base CB1-CB3 de la base de couleurs BS1 sur la surface du code graphique CG1, et en particulier dans les positions de chaque zone de données ZC. Cette interpolation spatiale permet d'estimer le rendu visuel théorique de chaque couleur de base CB1-CB3 en fonction de la position des zones de données ZD dans le code graphique CG1. Une estimation de la couleur théoriquement observable CLC dans les conditions d'acquisition courantes CD1 pour chaque couleur de la base de couleurs BS1 est ainsi produite dans les positions de chaque zone de données ZC du code graphique CG1 en fonction desdites positions des zones de données ZC dans le code graphique 2D CG1.

Cette interpolation spatiale S10 peut être réalisée de diverses manières. Comme illustré en **figure 5****,** l'unité de traitement DV3 peut par exemple réaliser une interpolation linéaire pour chaque couleur de base de la base de couleurs BS1 à partir des valeurs mesurées en S4 (c.-à-d. les couleurs observables CLB) dans les zones de calibrations ZC présentant comme couleur réelle CLA ladite couleur de base. Cette étape S10 d'interpolation spatiale produit dans cet exemple 3 interpolations linéaires INT1, INT2 et INT3 représentant respectivement le rendu visuel dans les conditions d'acquisition courantes CD1 des couleurs de base CB1, CB2 et CB3 sur la surface du code graphique CD1 (en particulier aux positions des zones de données ZD). D'autres types d'interpolations spatiales peuvent toutefois être mis en œuvre. L'interpolation spatiale INT1 pour la couleur de base CB1 est générée dans cet exemple à partir des valeurs des couleurs observables CLB1 et CLB2 mesurées en S4 pour respectivement les zones de calibration ZC1 et ZC2. L'interpolation spatiale INT2 pour la couleur de base CB2 est générée à partir des valeurs des couleurs observables CLB3 et CLB4 mesurées en S4 pour respectivement les zones de calibration ZC3 et ZC4. L'interpolation spatiale INT3 pour la couleur de base CB3 est générée à partir des valeurs des couleurs observables CLB5 et CLB6 mesurées en S4 pour respectivement les zones de calibration ZC5 et ZC6. Comme représenté en **figure 5****,** les estimations produites par interpolation spatiale (de type linéaire dans cet exemple) dans les zones de données sont fonction de la position respective des zones de données ZD à la surface du code graphique 2D CG1.

Par souci de simplicité, les interpolations linéaires INT1, INT2 et INT3 représentées en **figure 3** sont générées à partir de seulement deux valeurs de couleur observable CLB effectivement mesurées en S4. En comprend toutefois qu'un nombre plus grand de valeurs CLB peut être pris en compte afin d'augmenter la précision de l'interpolation.

Selon un exemple particulier, il est possible d'affecter (S20, **figure 4****)** des poids (ou pondérations) W aux couleurs observables CLB mesurées dans les zones de calibration ZC pour une couleur de base donnée pour produire une estimation de la couleur théoriquement observable CLC dans les conditions d'acquisition courantes CD1 pour ladite couleur de base sur la surface du code graphique CG1. On peut ainsi adapter le poids W des zones de calibration ZC lors de l'interpolation spatiale S10 dans les positions de chaque zone de données ZC. En affectant ainsi des poids W (non tous égaux), on peut adapter l'importance des couleurs observables CLB mesurées dans les zones de calibration ZC dans le calcul de l'interpolation spatiale de chaque couleur de base, ce qui permet d'améliorer encore davantage la qualité de l'interpolation spatiale.

L'interpolation spatiale S10 peut par exemple être réalisée de sorte à attribuer, pour au moins une zone de données ZD, des poids W différents aux couleurs observables CLB mesurées dans les zones de calibration ZC en fonction de la distance séparant les zones de calibration ZC de ladite zone de données ZD considérée.

Selon un exemple particulier, lors de l'interpolation spatiale S10, l'estimation de la couleur théoriquement observable CLC pour chaque couleur de base de la base de couleurs BS1 est adaptée (S20, **figure 4****)** dans chaque zone de données ZD de sorte qu'un poids W plus important est attribué à une couleur observable CLB mesurée dans une première zone de calibration ZC1 présentant une couleur de référence dans la base de couleurs BS1 par rapport à une couleur observable CLB mesurée dans au moins une autre deuxième zone de calibration ZC2 présentant cette même couleur de référence si la première zone de calibration ZC1 est plus proche de la zone de données ZD considérée que ladite au moins une deuxième zone de calibration ZC2. Cette adaptation particulière des poids W lors de l'interpolation spatiale S10 permet d'allouer une importance plus importance aux couleurs observables CLB effectivement mesurées dans les zones de calibration ZC proches d'une zone de données ZD considérée qu'aux couleurs observables CLB effectivement mesurées dans des zones de calibration ZC éloignées de cette zone de données ZD, ce qui peut améliorer encore la qualité de l'interpolation spatiale.

Selon un exemple particulier, les zones de calibration ZC sont réparties de manière uniforme sur la surface du code graphique CG1, ce qui permet de faciliter l'interpolation spatiale et d'obtenir des résultats plus uniformes, et donc plus fiables, sur toute la surface du code graphique CG1, et plus particulièrement au niveau des zones de données ZD. Ainsi, le code graphique CG1 peut comprendre une matrice uniforme de zones de calibration ZC pour chaque couleur de base de la base de couleurs BS1. En particulier, un espacement constant peut être maintenu entre chaque pair de zones de calibration consécutives d'une même couleur de base.

En variante, les zones de calibration ZC sont réparties de manière aléatoire sur la surface du code graphique CG1, ce qui permet de sécuriser les informations stockées dans le code graphique CG1 dans la mesure où il peut être plus difficile pour un tiers malveillant de déterminer où sont les zones de calibrations dans le code graphique CG1. Quelle que soit la configuration choisie, il est toutefois nécessaire que le dispositif de lecture DV1 connaisse à l'avance les positions prédéfinies des zones de calibration ZC pour pouvoir mettre en oeuvre le procédé de lecture.

Il est aussi possible d'adapter le nombre des zones de calibration ZC et/ou leur taille. Plus l'espace réservé aux zones de calibration ZC dans le code graphique CG1 est important par couleur de base considérée, plus la qualité de l'interpolation spatiale S10 est élevée.

Au cours d'une étape S12 de classification **(****figures 4-5****),** l'unité de traitement DV3 réalise ensuite une classification, à partir du résultat de l'interpolation spatiale S10, pour déterminer la couleur réelle CLA (autrement dit la classe) attribuée à au moins une zone de données ZD analysée dans le code graphique CG1. L'unité de traitement DV3 peut ainsi analyser une zone de données ZD ou une pluralité d'entre elles selon la position des informations que l'on souhaite lire dans le code graphique CD1. On suppose dans cet exemple que, lors de la classification S12, chaque zone de données ZD du code graphique CG1 est analysée pour en déterminer la couleur réelle CLA attribuée dans la base de couleurs BS1.

Lors de la classification S12, l'unité de traitement DV3 réalise pour chaque zone de données ZD analysée une étape S14 de comparaison et une étape S16 de détermination. Plus précisément, l'unité de traitement DV3 compare (S14) la couleur observable CLB mesurée (en S4) dans ladite zone de données ZD analysée avec la couleur théoriquement observable CLC estimée par interpolation (en S10) pour chaque couleur de base CB1-CB3 de la base de couleurs BS1 à la position de ladite zone de données ZD analysée. L'unité de traitement DV3 détermine (S16) ensuite, en tant que couleur réelle CLA de ladite zone de données ZD analysée, la couleur de base de la base de couleurs BS1 pour laquelle la couleur théoriquement observable CLC estimée à la position de ladite zone de données ZD analysée est la plus proche de la couleur observable CLB mesurée dans ladite zone de données ZD analysée.

Ainsi, comme représenté en **figure 5****,** l'unité de traitement DV3 détermine (S14) dans cet exemple à partir des interpolations spatiales INT1, INT2 et INT3 une estimation des couleurs théoriquement observables CLC pour chacune des couleurs de base CB1, CB2 et CB3 à la position d'une zone de données ZD10 en cours d'analyse. L'unité de traitement DV3 peut alors comparer (S14) la couleur observable CLB10 mesurée (en S4) dans ladite zone de données ZD10 analysée avec les valeurs interpolées CLC1, CLC2 et CLC3 obtenues respectivement pour chacune des couleurs de base CB1, CB2 et CB3 à la position de la zone de données ZD10. L'unité de traitement DV3 détermine (S16) ainsi dans cet exemple que c'est la valeur de la couleur théoriquement observable CLC1 obtenue pour la couleur de base CB1 qui est la plus proche de la valeur de la couleur observable CLB10 effectivement mesurée en S4 pour la zone de données ZD10 considérée. L'unité de traitement DV3 en déduit que la zone de données ZD10 présente comme couleur réelle CLA10 la couleur de base CB1.

Comme représenté en **figure 5****,** l'unité de traitement DV3 peut lors l'étape S14 de comparaison déterminer un écart de couleur respectif e1, e2 et e3 entre la couleur observable CLB10 mesurée dans la zone de données ZD10 et la couleur théoriquement observable CLC1, CLC2 et CLC3 estimée pour chaque couleur de base CB1, CB2 et CB3 à la position de la zone de données ZD10. La couleur réelle CLA10 déterminée (en S16) en tant que couleur attribuée à la zone de données ZD10 analysée est alors la couleur de base pour laquelle l'écart est le plus faible. Dans cet exemple, l'écart e1 étant inférieur à e2 et e3, c'est la couleur de base CB1 qui est identifiée comme étant la couleur réelle CLA10 de la zone de données ZD10. Cette étape de comparaison S14 peut ainsi être réalisée dans chaque zone de données ZD que l'on souhaite lire.

Comme représenté en **figure 4****,** une fois que la couleur réelle CLA des zones de données ZD a été déterminée (S12), l'unité de traitement DV3 peut en déduire des informations IF1 particulières. Autrement dit, l'unité de traitement DV3 peut déterminer des informations IF1 encodées dans le code graphique CG1 à partir de la couleur réelle CLA déterminée lors de la classification S12 comme étant attribuée à chaque zone de données ZD analysée. Selon un exemple particulier, toutes les zones de données ZD sont analysées de sorte à ce que l'unité de traitement DV3 puisse lire la totalité des informations codées dans le code graphique CG1.

La présente invention permet de lire de façon fiable et précise un code graphique 2D, qu'il soit en couleur ou en noir et blanc, et ce qu'elles que soient les conditions d'acquisition dans lesquelles la lecture est réalisée. Grâce à l'interpolation spatiale réalisée à partir des couleurs observables mesurées dans les zones de calibration, il est possible d'obtenir des résultats de lecture fiables et uniformes pour un même code graphique 2D malgré les différences de configuration matérielle et/ou logicielle pouvant exister entre différents dispositifs de lecture utilisés (notamment au niveau du dispositif de prise de vue et de l'algorithme de traitement). Le caractère uniforme et répétitif des résultats de lecture est également assuré sous des conditions d'éclairage variables d'une opération de lecture à une autre. Une lecture fiable et précise peut également être réalisée même sous des conditions d'éclairage complexes lors d'une opération de lecture (par exemple lorsque l'éclairage auquel est exposé le code graphique 2D n'est pas homogène).

Il a en particulier été constaté qu'un éclairage hétérogène (causant par exemple des zones surexposées et/ou des zones sous-exposées en lumière) augmente significativement les risques d'erreurs lors de la lecture d'un code graphique 2D. L'invention permet de pallier ce problème en rendant les résultats de lecture indépendants de l'éclairage utilisé.

L'invention permet également de lire des informations stockées dans des codes graphiques couleurs (y compris des code graphiques avec de multiples niveaux de gris), en limitant les erreurs susceptibles de se produire en raison notamment de la ressemblance des couleurs de base utilisées (par exemple lorsque l'on utilise un grand nombre de couleurs de base) ou encore lorsque l'éclairage n'est pas homogène. Il est ainsi possible de stocker une plus grande quantité d'information dans une surface donnée.

En particulier, il a été constaté que les codes graphiques couleurs sont difficiles à lire en raison de la forte influence des conditions d'éclairage et de la configuration (matérielle et logicielle) du dispositif de lecture utilisé sur les couleurs lues dans ces codes graphiques. L'invention permet de pallier ces problèmes.

De plus, l'invention permet de sécuriser les informations stockées dans le code graphique 2D de l'invention. Sans connaître à l'avance la position des zones de calibrations et des zones de données dans un code graphique 2D de l'invention, il est difficile pour un tiers malveillant de lire les informations stockées dans ce code graphique.

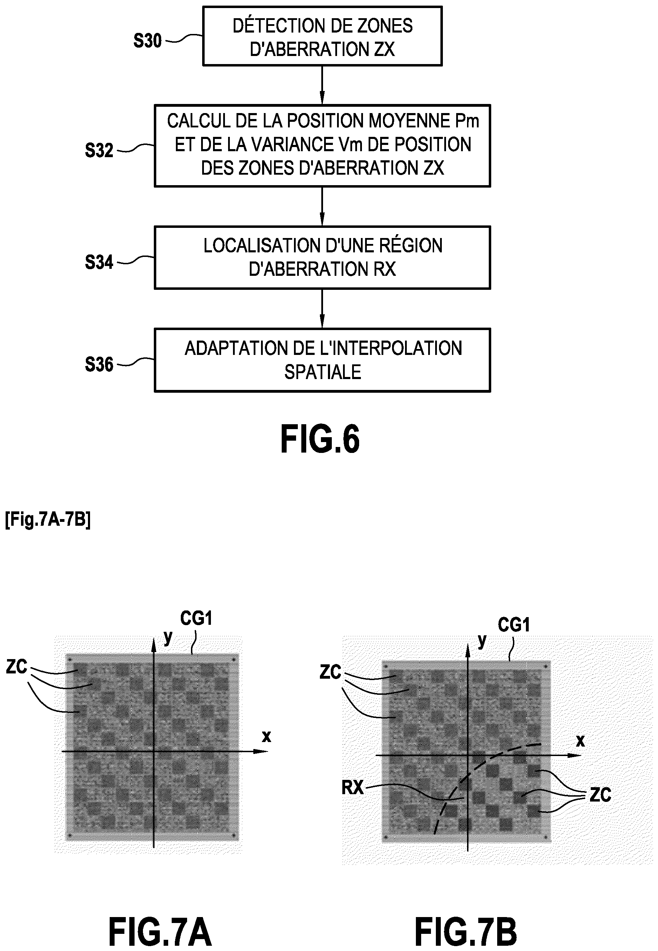

La **figure 6** représente un procédé de lecture mis en œuvre par le dispositif de lecture DV1 représenté en **figures 2-3****,** selon un mode de réalisation particulier. Les étapes mises en œuvre dans ce mode de réalisation sont à présent décrites en référence aux **figures 6-9****.**

Comme déjà indiqué, les conditions d'éclairage constituent un facteur déterminant lors de la lecture d'un code graphique 2D. Si le code graphique 2D faisant l'objet de la lecture n'est pas éclairé de façon homogène, des variations plus ou moins importantes d'exposition lumineuse peuvent affecter diverses régions du code graphique, ce qui peut dégrader la qualité de la lecture.

Selon ce mode de réalisation, le dispositif de lecture DV1 adapte la manière dont l'interpolation spatiale est réalisée (S10, **figures 4-5****)** en fonction des conditions d'exposition lumineuse du code graphique 2D. En particulier, le dispositif de lecture DV1 analyse les zones d'aberration susceptibles de survenir à diverses positions du code graphique 2D et adapte en conséquence l'interpolation spatiale pour garantir des résultats de lecture fiables et précis.

Pour ce faire, le dispositif de lecture DV1 peut prendre en compte les zones d'aberration ZX susceptibles d'apparaître à la lecture dans certaines zones du code graphique considéré (comme décrit plus en détail ci-après). Ces zones d'aberration ZX sont des zones du code graphique dans lesquelles la couleur observable CLB mesurée (c'est-à-dire l'intensité de couleurs observable), est anormalement faible (ou très éloignée) par rapport à celles des zones de même classe (même couleur réelle CLA) du code graphique 2D dans son ensemble.

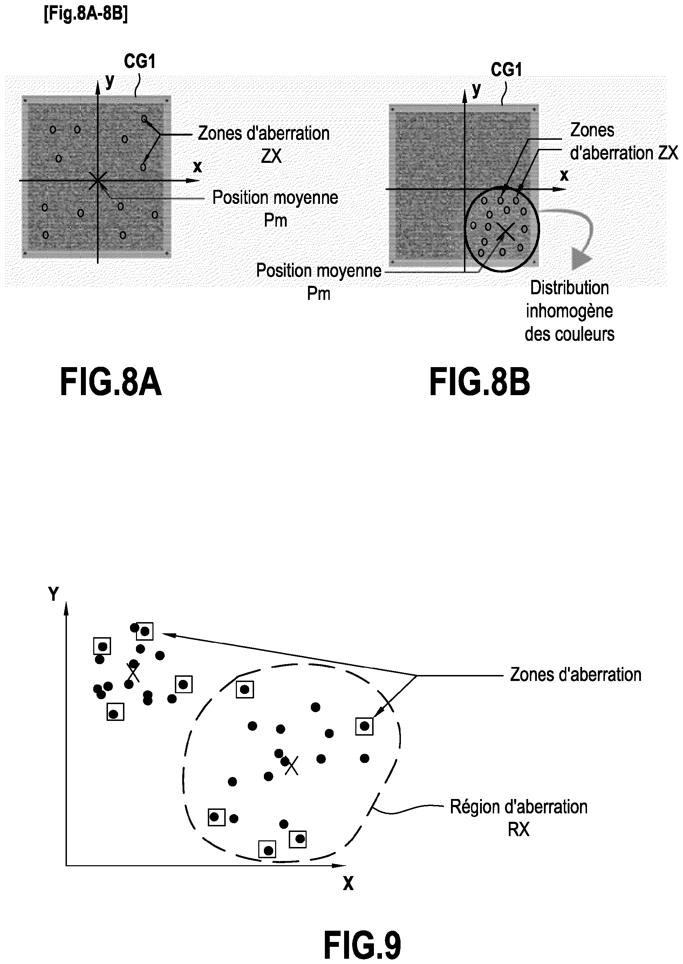

Ainsi, comme illustré en **figures 7A** et **8A****,** si le code graphique CG1 précédemment décrit est soumis à des conditions d'exposition lumineuses homogènes, toutes les zones de calibration ZC du code graphique CG1 présentent lors de la lecture des couleurs observables CLB (c'est-à-dire des intensités de couleurs observables) uniformes (proches les unes des autres). En particulier, chaque zone de calibration ZC présentant une même couleur réelle CLA apparaît à la lecture avec une couleur observables CLB similaire. Dans ce cas, il a été constaté que les zones d'aberration ZX **(****figure 8****)** susceptibles d'apparaître à la lecture dans certaines zones du code graphique CG1 sont uniformément réparties sur la surface du code graphique CG1.

En revanche, comme illustré en **figures 7B** et **8B****,** si le code graphique CG1 précédemment décrit est soumis à des conditions d'exposition lumineuses hétérogènes, les zones de calibration ZC du code graphique CG1 présentent lors de la lecture des couleurs observables CLB hétérogènes. Dans l'exemple représenté en **figure 7B****,** le coin inférieur droit présente une région RX, dite région d'aberration, qui est sous-exposée par rapport au reste du code graphique CG1. Aussi, les zones de calibration ZC positionnées dans la région d'aberration RX présentent une intensité de couleur sensiblement inférieure (et donc des couleurs plus sombres) à celle des zones de calibration ZC situées hors de cette région d'aberration RX. Comme illustré en **figure 8B****,** il a été constaté dans ce cas que les zones d'aberration ZX susceptibles d'apparaître à la lecture dans certaines zones du code graphique CG1 sont regroupées dans la région d'aberration RX. Comme illustré en **figure 9****,** ceci se traduit par un décentrage de la position moyenne Pm des zones d'aberration ZX, c'est-à-dire un déplacement de cette position moyenne Pm depuis le centre du code graphique CG1 (en cas d'exposition lumineuse homogène, cf. **figure 8A****)** vers une position décentrée située dans la région d'aberration RX (en cas d'exposition lumineuse hétérogène, cf. **figure 8B****).** La variance de position Vm des zones d'aberration ZX détectées lors de la lecture est également significativement réduite en cas d'exposition lumineuse hétérogène.

On suppose à présent que le dispositif de lecture DV1 réalise les étapes S2 et S4 telles que précédemment décrites en référence aux **figures 4-5****.** En outre, comme illustré en **figure 6****,** l'unité de traitement DV3 réalise les étapes S30, S32, S34 et S36 pour adapter l'interpolation spatiale selon les conditions d'éclairage auxquelles est soumis le code graphique CG1. Ces conditions d'éclairage constituent un paramètre des conditions d'acquisition courantes CD1.

Plus précisément, au cours de l'étape S30 de détection, l'unité de traitement DV3 détecte des zones d'aberration ZX dans les zones de calibration ZC, à partir des couleurs observables CLB mesurées lors de l'étape S4 de mesure. Diverses techniques peuvent être employées pour détecter des zones d'aberration ZX. Dans l'exemple décrit ici, l'unité de traitement DV3 détermine l'intensité de couleur moyenne Lm de l'ensemble du code graphique CG1 à partir des données d'image DT1 et détermine qu'une zone de calibration ZC constitue une zone d'aberration ZX si son intensité de couleur est sensiblement inférieure à l'intensité de couleur moyenne Lm. Dans cet exemple, l'unité de traitement DV3 détermine qu'une zone de calibration ZC constitue une zone d'aberration ZX si cette zone de calibration ZC présente une intensité de couleur qui satisfait une condition CD2 prédéfinie. Cette condition CD2 est par exemple remplie si l'intensité de couleur L mesurée pour une zone de calibration ZC lors de l'étape S4 de mesure est inférieure ou égale à X% de l'intensité de couleur moyenne Lm, où X est un entier positif tel que X ≤ 75 (X est par exemple égal à 75, 60 ou 50). En variante, la condition CD2 est remplie si l'intensité lumineuse de la zone considérée se situe hors d'un intervalle [moyenne d'intensité lumineuse - k*Ecart type ; moyenne d'intensité lumineuse + k*écart type], où k est un nombre réelle >0.

Une fois les zones d'aberration ZX détectées (S30), l'unité de traitement DV3 réalise une étape S32 de calcul au cours de laquelle elle calcule la position moyenne Pm des zones d'aberration ZX détectées dans le code graphique CG1 et calcule la variance de position Vm de ces zones d'aberration ZX.

Au cours d'une étape S34 de localisation, l'unité de traitement DV3 détermine si une région d'aberration RX est présente à la surface du code graphique CG1. Pour ce faire, l'unité de traitement DV3 compare la position moyenne Pm obtenue en S32 avec une position centrale de référence PC représentative de la position moyenne théorique des zones d'aberration ZX en cas d'éclairage homogène (cette position PC correspond par exemple au centre géométrique du code graphique considéré). En cas d'éclairage homogène, la position moyenne Pm est censée coïncider avec, ou tout du moins être proche de, la position centrale de référence PC. Dans le cas contraire, la position moyenne Pm est censée être relativement éloignée de cette position centrale de référence PC. Selon un exemple particulier, si la distance séparant la position moyenne Pm et la position centrale de référence PC excède un seuil prédéfini, l'unité de traitement DV3 détermine (S34) qu'une région d'aberration RX existe.

L'unité de traitement DV3 peut, outre la position moyenne Pm, analyser la variance moyenne Vm pour détecter la présence d'une région d'aberration RX. Lorsqu'une région d'aberration RX se produit, la variance de position Vm est généralement inférieure à un seuil prédéfinie, qui peut être définie comme un pourcentage d'une variance moyenne de référence.

On suppose dans cet exemple que l'unité de traitement DV3 détecte (S34) une région d'aberration RX qui se situe ici dans le coin inférieur droit du code graphique CG1 **(****figures 7B** et **8B****).** L'unité de traitement DV3 localise (S34) en outre cette région d'aberration RX à partir de la position moyenne Pm et de la variance de position Vm précédemment calculées.

Dans le cas considéré ici où une région d'aberration RX est détectée et localisée, l'unité de traitement DV3 adapte (S36, figure 6) l'interpolation spatiale S10 telle que précédemment décrite en référence aux **figures 4-5****.** Plus particulièrement, l'interpolation spatiale S10 est adaptée en ce que pour chaque position d'une zone de données ZC, l'unité de traitement DV3 vérifie si elle se trouve dans la région d'aberration RX ou non. Dans l'affirmative, l'interpolation spatiale est réalisée dans ladite zone de données ZD de sorte à attribuer (S20) des poids W plus importants aux couleurs observables CLB mesurées dans les zones de calibration ZC situées dans la région d'aberration RX qu'aux couleurs observables CLB mesurées dans les zones de calibration ZC situées hors de la région d'aberration RX.

Il est ainsi possible d'améliorer encore davantage les résultats de l'interpolation spatiale, et donc de la lecture du code graphique 2D dans son ensemble, en adaptant l'interpolation spatiale si une région d'aberration RX est détectée dans le code graphique 2D. Lors de l'interpolation spatiale S10, on donne plus d'importance aux couleurs observables CLB des zones de calibration ZC situées dans la région d'aberration RX (que celles positionnées en dehors) pour estimer, dans les zones de données ZC situées dans la région d'aberration RX, la couleur théoriquement observable CLC pour chacune des couleurs de base de la base de couleur BS1.

Comme déjà indiqué, l'invention permet de manière générale de lire de façon fiable et précise des codes graphiques 2D à haute densité, en particulier des codes graphiques comportant des informations codées dans une base d'au moins 2, voire au moins 3, couleurs (ou niveaux de gris) distinctes. Un problème réside toutefois dans la difficulté de différencier différentes couleurs de base, notamment lorsque le nombre de couleurs de base est important, par exemple dans une base de 64 ou 128 couleurs, voire plus (l'écart entre les couleurs de base étant par conséquent plus faible). Une manière de limiter les erreurs de lecture lors du procédé de lecture de l'invention est de réserver une relativement grande partie de la surface du code graphique 2D aux zones de calibration ZC.

En outre, l'invention se propose d'utiliser des zones de vérification ZF (appelées aussi zones de correction d'erreur) pour vérifier la validité des zones de données ZD lors de la lecture du code graphique 2D. A partir de ces zones de vérification, on peut ainsi détecter des erreurs dans les zones de données ZC qui sont lues et les corriger si nécessaire, comme décrit plus en détail ci-après. Plus la partie du code graphique 2D réservée à ces zones de vérification ZF est importante, plus les erreurs peuvent être corrigées efficacement lors de la lecture du code graphique 2D, ce qui permet d'améliorer encore la qualité de lecture lors de la mise en œuvre de l'invention.

Cependant, un problème supplémentaire se pose en ce que plus la portion du code graphique 2D réservée aux zones de calibration ZC et aux zones de vérification ZF est importante et moins il reste de la place dans le code graphique 2D pour y stocker des informations dans des zones de données ZD. L'ajout de zones de vérification ZF peut en particulier drastiquement diminuer la quantité d'information utile encodable dans le code graphique 2D.

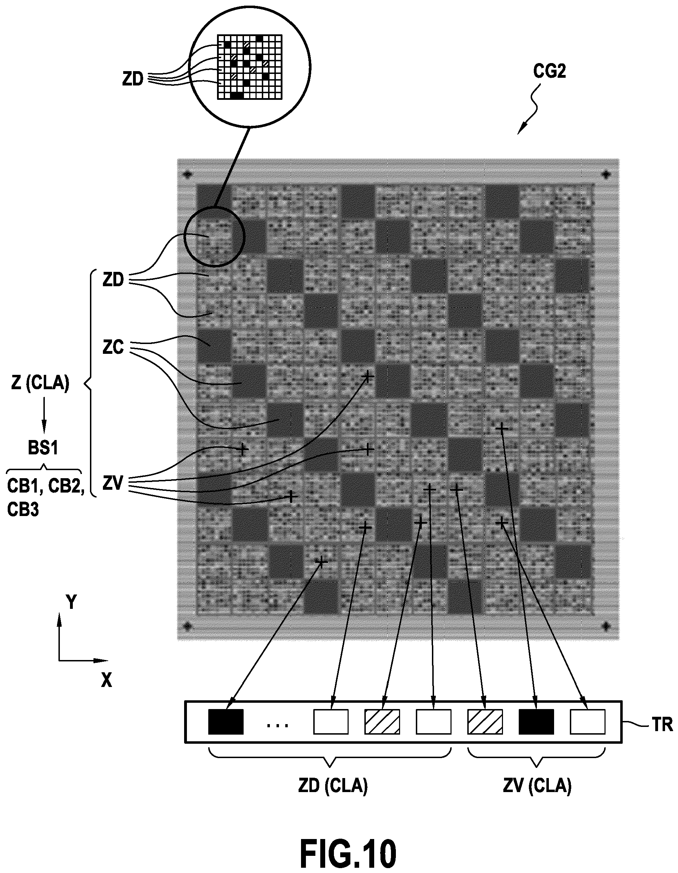

Pour pallier ces problèmes, l'invention propose un mode de réalisation particulier représenté en **figure 10** dans lequel le code graphique CG1 décrit précédemment est adapté afin d'y intégrer, en plus des zones de données ZD et des zones de calibration ZC, au moins une zone de vérification ZV (appelée aussi zone de correction d'erreur), de sorte à former un nouveau code graphique noté CG2. Sauf indications contraires, la description précédente du code graphique CG1 s'applique de façon analogue au code graphique CG2, qui diffère uniquement par l'inclusion de zones de vérification ZV.

Bien que la présence d'une seule zone de vérification VF puisse éventuellement suffire dans certains cas particulier, on considère l'exemple illustré en **figure 10** dans lequel le code graphique CG2 comprend une pluralité de zones de vérification ZF.

Ces zones de vérification ZV, de même que les autres zones Z comprises dans le code graphique CG2, présentent chacune une couleur réelle CLA qui lui est attribuée dans la base de données BS1 de N couleurs de base distinctes CB1-CB3 (où N=3 dans cet exemple).

La taille, le nombre et la répartition de ces zones de vérification ZV peuvent être adaptés selon le cas. En particulier, comme cela apparaîtra ultérieurement, la proportion du code graphique CG2 réservée aux zones de vérification ZF peut être limitée dans le cas présent grâce à un aspect particulier de l'invention décrit ci-après.

En outre, comme illustré en **figure 10****,** les zones de données ZD sont regroupées en trames TR d'au moins deux zones de données ZD chacune. Au moins une zone de vérification ZV est associée ou allouée à chaque trame TR du code graphique CG2. Autrement dit, chaque trame TR comprend une pluralité de zones de données ZD et au moins une zone de vérification ZV. Dans l'exemple considéré ici, chaque zone de données ZD et chaque zone de vérification ZV est allouée à une unique trame TR.

On suppose par la suite que chaque trame TR définie dans le code graphique CG2 comprend une pluralité de zones de vérification ZF, bien que d'autres exemples soient possibles. On suppose également dans cet exemple que les trames TR sont définies de sorte à ce qu'elle n'inclus pas de zone de calibration ZC.

Comme déjà indiqué, les zones de vérification ZF sont destinées à permettre au dispositif de lecture DV1 de vérifier la validité des zones de données ZD lors de la lecture du code graphique CG2. A cette fin, dans chaque trame TR du code graphique CG2, la couleur réelle CLA attribuée à chaque zone de vérification ZF dans ladite trame TR est fonction des couleurs réelles TR attribuées aux zones de données ZD de ladite trame TR. En exécutant un algorithme de traitement, il est possible, à partir des couleurs réelles CLA déterminées dans les zones de données ZD et dans les zones de vérification ZV d'une trame TR, de détecter si au moins une erreur s'est produite lors de la lecture (dans des zones de données ZD et/ou dans des zones de vérification VF) et, dans l'affirmative, de corriger l'erreur dans une ou plusieurs de ces zones erronées.

A noter que lors de la lecture du code graphique CG2, des erreurs de lecture peuvent survenir dans les zones de données ZD mais également dans les zones de vérification ZV. Ces zones de vérification ZV permettent ainsi, au sein de la trame à laquelle elle appartienne, de détecter les erreurs susceptibles de survenir dans les zones de données ZD et dans les zones de vérification ZV de ladite trame TR.

Les zones de vérification ZF sont réparties dans le code graphique CG2 sans être nécessairement à proximité des zones de données ZD de la trame TR à laquelle elles appartiennent. De la même manière, les différentes zones de données ZD d'une même trame TR ne sont pas nécessairement à proximité les unes des autres. Il est en particulier possible de définir des trames TR de sorte que les zones de vérification VF d'une même trame TR soient relativement éloignées les unes des autres afin de rendre la correction d'erreur moins sensible aux conditions d'éclairage, ce qui permet d'améliorer la qualité de la lecture.

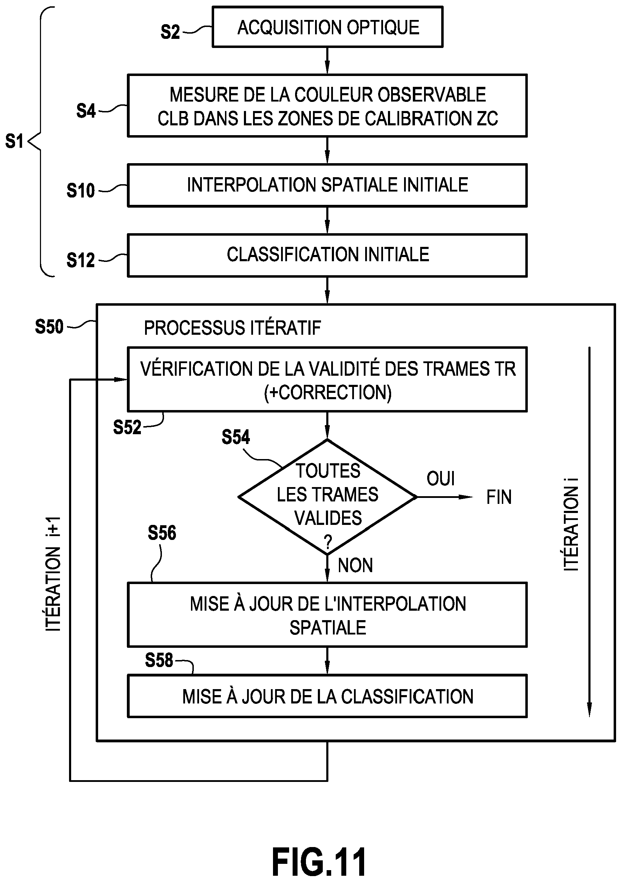

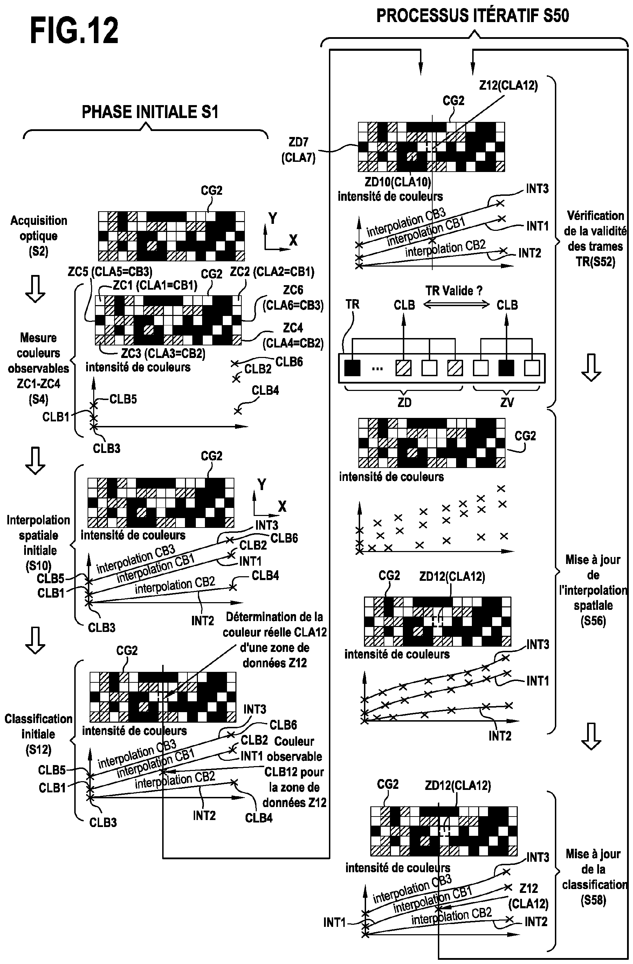

Un procédé de lecture, mis en œuvre par le dispositif de lecture DV1 représenté en **figures 2-3****,** est à présent décrit en référence aux **figures 11-12****.** L'unité de traitement DV3 exécute en particulier les instructions du programme d'ordinateur PG1 pour réaliser la lecture du code graphique CG2 illustré en **figure 10****.** La **figure 12** illustre la mise en œuvre du procédé de la **figure 11** selon un exemple particulier.

Dans ce mode particulier, le dispositif de lecture DV1 réalise lors d'une phase initiale S1 les étapes S4, S6, S10 et S12 telles que précédemment décrites en référence aux **figures 4-5****,** puis réalise à nouveau ces étapes de façon adaptée dans un processus itératif S50, de sorte à lire le code graphique CG2. A noter que, sauf indications contraires, la description faite précédemment de chacune de ces étapes S4, S6, S10 et S12 s'applique de façon analogue dans ce mode de réalisation.

Plus précisément, le dispositif de lecture DV1 réalise une étape S2 d'acquisition optique **(****figures 11-12****)** du code graphique CG2 illustré en **figure 10****.**

L'unité de traitement DV3 réalise ensuite une étape S4 de mesure de la couleur observable CLB dans les zones de calibration ZC du code graphique CG2, comme déjà décrit précédemment en référence aux **figures 4-5****.** On suppose dans cet exemple particulier que l'unité de traitement DV3 mesure, à partir des données d'image DT1, la couleur observable CLB dans toutes les zones Z du code graphique CG2, c'est-à-dire dans les zones de calibration ZC, dans les zones de données ZD et dans les zones de vérification ZF. Lors de l'étape S4 de mesure, l'unité de traitement DV3 peut ainsi notamment détecter, à partir de données de position DP1 préalablement enregistrées, les zones de calibration ZC dans le code graphique CG2 puis mesurer la couleur observable CLB dans ces zones de calibration ZB, de façon analogue à ce qui est décrit précédemment en référence aux **figures 4-5****.**

Au cours d'une étape S10 d'interpolation spatiale, l'unité de traitement DV3 réalise ensuite comme déjà décrit précédemment une interpolation spatiale, à partir des couleurs observables CLB mesurées dans les zones de calibration ZC et des positions prédéfinies des zones de calibration ZC, pour produire une estimation de la couleur théoriquement observable CLC dans les conditions d'acquisition courantes CD1 pour chaque couleur (CB1-CB3) de la base de couleurs BS1 sur la surface du code graphique CG2. Cette étape constitue une interpolation spatiale initiale dans le sens où elle est réalisée lors de la phase initiale S1 préalable au processus itératif S50.

Autrement dit, l'étape d'interpolation spatiale S10 telle que précédemment décrite en référence aux **figures 4-5** est appliquée cette fois aux zones de données ZD et aux zones de vérification ZV de sorte à produire une estimation de la couleur théoriquement observable CLC dans les conditions d'acquisition courantes CD1 pour chaque couleur de base de la base de couleurs BS1 dans les positions des zones de données ZD et des zones de vérification ZV.

Lors de cette étape S10 d'interpolation spatiale, l'unité de traitement DV3 peut ainsi réaliser une interpolation spatiale pour estimer respectivement la couleur théoriquement observable CLC dans les conditions d'acquisition courantes CD1 pour chaque couleur de base CB1-CB3 de la base de couleurs BS1 dans les positions de chaque zone de données ZC et de chaque zone de vérification ZV. Cette interpolation spatiale permet d'estimer le rendu visuel théorique de chaque couleur de base CB1-CB3 en fonction de la position dans le code graphique CG1. Une estimation de la couleur théoriquement observable CLC dans les conditions d'acquisition courantes CD1 pour chaque couleur de la base de couleurs BS1 est ainsi produite dans les positions de chaque zone de données ZC et de chaque zone de vérification ZV du code graphique CG2.

L'unité de traitement DV3 réalise ensuite une étape de classification S12 **(****figures 11-12****)** comme déjà décrit précédemment pour déterminer, à partir du résultat de l'interpolation spatiale initiale S10, la couleur réelle CLA (autrement dit la classe) attribuée aux zones de données ZD et aux zones de vérification ZF analysées dans le code graphique CG2. Cette étape S12 constitue ici une classification initiale dans le sens où elle est réalisée lors de la phase initiale S1 préalable au processus itératif S50. On suppose dans cet exemple que, lors de la classification initiale S12, chaque zone de données ZD et chaque zone de vérification ZF du code graphique CG2 est analysée pour en déterminer la couleur réelle CLA attribuée dans la base de couleurs BS1, bien que d'autres exemples soient possibles.

Autrement dit, l'étape de classification S12 telle que précédemment décrite en référence aux **figures 4-5** est appliquée aux zones de données ZD et aux zones de vérification ZV de sorte à déterminer, à partir de l'interpolation spatiale initiale S10, la couleur réelle CLA attribuée aux zones de données ZD et aux zones de vérification ZV du code graphique CG2.

Comme illustré en **figure 12****,** on nomme par exemple Z12 une zone de données ZD ou une zone de vérification ZV dont l'unité de traitement DV3 cherche à déterminer la couleur réelle correspondante CLB12 au cours de l'étape de classification initiale S12. L'unité de traitement DV3 détermine par exemple que la couleur de base CB1 est la couleur réelle CLA12 attribuée à la zone analysée Z12 car la couleur observable CLB12 de la zone Z12 analysée est plus proche de la valeur théoriquement observable CLC interpolée pour la couleur de base CB1 (comme défini par INT1) que des valeurs théoriquement observable CLC interpolées respectivement pour les couleurs de base CB2 et CB3 (comme défini respectivement par INT2 et INT3).

L'unité de traitement DV3 réalise ensuite le processus itératif S50 **(****figures 11-12****)** qui comprend au moins une itération au cours de laquelle le procédé réalise les étapes S52 à S58 comme décrit ci-après. On décrit à présent les étapes S52-S58 lors d'une première itération constituant une itération courante i du processus itératif. On comprend que cette description s'applique par analogie à chaque itération réalisée par l'unité de traitement DV3 au cours du processus itératif S50.

Au cours de l'étape S52, l'unité de traitement DV3 vérifie, pour chaque trame TR du code graphique CG2, la validité des couleurs réelles CLA déterminées lors de la précédente classification pour les zones de données ZD de ladite trame TR, à partir de la couleur réelle CLA déterminée lors de ladite précédente classification pour les zones de vérification ZV de ladite trame TR. De manière générale, on entend par « précédente classification » la dernière classification S12 réalisée à ce stade par l'unité de traitement DV3 au cours du processus itératif S50 (lors de la précédente itération) ou, à défaut (s'il s'agit de la première itération du processus itératif), la classification initiale S12 réalisée au cours de la phase initiale S1. Dans le cas considéré ici, la précédente classification qui est prise en compte à l'étape S52 de vérification est donc la classification initiale S12 réalisée au cours de la phase initiale S1.

La vérification S52 de la validité est réalisée par l'unité de traitement DV3 en exécutant un algorithme de vérification prédéfini (tel que le code de Reed-Solomon ou tout autre code correcteur approprié) qui peut être adapté selon le cas. L'unité de traitement DV3 peut réaliser un calcul d'intégrité à partir des couleurs réelles CLA déterminées lors de la précédente classification S12 pour les zones de données ZD d'une trame TR donnée et vérifier si le résultat de ce calcul est conforme aux couleurs réelles CLA déterminées lors de la précédente classification S12 pour les zones de vérification ZV de cette trame TR. Comme déjà indiqué, le code graphique CG2 est configuré de sorte que, pour chaque trame TR du code graphique CG2, la couleur réelle CLA attribuée à chaque zone de vérification ZF dans ladite trame TR est fonction des couleurs réelles CLA attribuées aux zones de données ZD de ladite trame TR. En exécutant le calcul d'intégrité suivant un algorithme de vérification approprié, il est possible de vérifier la correspondance entre les couleurs des zones de données ZD et celles des zones de vérification ZV dans une même trame TR.

A partir de ce calcul d'intégrité réalisé en S52 pour chaque trame TR, l'unité de traitement DV3 peut détecter (S52) si au moins une erreur s'est produite lors de la lecture, c'est-à-dire si une couleur déterminée en tant que couleur réelle CLA dans au moins une zone de donnée ZD et/ou dans au moins une zone de vérification ZV de ladite trame est erronée.

Selon un exemple particulier, au cours de l'étape S52 de vérification, la validité de chaque trame TR est vérifiée en réalisant un calcul d'intégrité sur les couleurs réelles CLA déterminées lors de la précédente classification (à savoir, la classification initiale S12 dans cet exemple) pour les zones de données ZD de la trame TR et en comparant le résultat de ce calcul d'intégrité avec la couleur réelle CLA déterminée lors de ladite précédente classification pour les zones de vérification ZV de la trame TR considérée.

Si au moins une erreur est détectée lors de l'étape S52 de vérification, l'unité de traitement DV3 peut éventuellement aussi corriger, à partir des résultats du calcul effectué, une erreur dans une ou plusieurs zones (zones de données ZD et/ou zones de vérification ZV) de la trame TR. Toutefois, il n'est généralement pas possible de corriger les couleurs réelles CLA d'une trame TR si un nombre trop important d'erreurs s'est produit lors de la précédente classification. De manière générale, on peut considérer par exemple qu'un algorithme de vérification permet de corriger jusqu'à k/2 erreurs dans une trame comprenant k zones de vérification ZV (k étant un entier tel que k ≥ 2).

L'unité de traitement DV3 détermine (S54) ensuite si toutes les trames TR vérifiées au cours de l'étape S52 de vérification qui précède sont valides. Une trame TR est considérée comme étant invalide si au moins une erreur a été détectée dans une zone de la trame TR (étant entendu que cette erreur n'a pas pu être corrigée dans le cas particulier où un mécanisme de correction est mis en œuvre lors de l'étape S52 de vérification). Si au moins une trame TR invalide est détectée (S54), le processus itératif S50 se poursuit à l'étape S56 de mise à jour. Dans le cas contraire, le processus itératif S50 prend fin dans la mesure où les couleurs réelles CLA déterminées lors de la précédente classification sont considérées comme étant justes, le procédé pouvant éventuellement se poursuivre en réalisant l'étape S18 de détermination comme déjà décrit précédemment en référence à la **figure 4****.**

Au cours de l'étape S56 de mise à jour, l'unité de traitement DV3 met à jour l'interpolation spatiale en utilisant, en tant que zone de calibration ZC, tout ou partie des zones des trames TR détectées comme valides, c'est-à-dire les trames TR dont les couleurs réelles CLA des zones de données ZD ont été déterminées comme étant valides lors de la vérification S50 de l'itération courante i. Cette mise à jour S56 se fait donc ici par rapport à la précédente interpolation spatiale, c'est-à-dire la dernière interpolation spatiale S56 réalisée par l'unité de traitement DV3 à ce stade au cours du processus itératif S50 (lors de la précédente itération) ou, à défaut (s'il s'agit de la première itération du processus itératif S50), l'interpolation spatiale initiale S10 réalisée au cours de la phase initiale S1. Dans le cas considéré ici (première itération), la précédente interpolation spatiale qui est donc mise à jour lors de l'étape S56 de mise à jour est l'interpolation spatiale initiale S10 réalisée au cours de la phase initiale S1.

Lors de cette mise à jour S56, l'unité de traitement DV3 réalise à nouveau (réitère) l'interpolation spatiale S10 (décrite ci-avant en référence aux **figures 4-5****)** lors de chaque itération courante i du processus itératif S50 en utilisant, en tant que zone de calibration ZC, tout ou partie des zones Z (les zones de données ZD et/ou les zones de vérification ZV) des trames TR déterminées comme étant valides lors de la vérification S52 de l'itération courante i, de sorte à mettre à jour l'estimation de la couleur théoriquement observable CLC dans les conditions d'acquisition courantes CD1 pour chaque couleur de base (CB1-CB3) de la base de couleurs BS1 sur la surface du code graphique 2D. En particulier, la mise à jour de cette estimation par interpolation peut être réalisée dans la position de chaque zone de données ZD et/ou de chaque zone de vérification ZV du code graphique CG2.

Au cours de cette mise à jour S56, l'unité de traitement DV3 évalue donc à nouveau par interpolation spatiale les couleurs théoriquement observables CLC dans les conditions d'acquisition courantes CD1 pour chaque couleur de base (CB1-CB3) dans toute la surface du code graphique CG2 mais en prenant en compte non seulement les couleurs de référence connues dans les zones de calibration ZC mais aussi les couleurs réelles CLA déterminées (et supposées correctes) dans les zones Z des trames TR détectées comme étant valides.

Cette mise à jour S56 permet d'améliorer progressivement la qualité de l'interpolation spatiale au fur-et-à-mesure des itérations du processus itératif S50 en utilisant en tant que zone de calibration ZC des zones de trames TR valides.

Selon un exemple particulier, lors de la mise à jour S56 de l'interpolation spatiale, au moins les zones de données ZD de chaque trame TR détectées comme étant valides lors de la vérification S50 de l'itération courante i sont prises en compte en tant que zones de calibration ZC lors de la mise à jour S56 de l'interpolation spatiale. Il est par exemple possible de n'utiliser que les zones de données ZD ou, alternativement, que les zones de vérification ZV des trames valides pour mettre à jour l'interpolation spatiale.

Selon un mode de réalisation préféré, lors de la mise à jour S56 de l'interpolation spatiale, chaque zone de données ZD et chaque zone de vérification ZV associée, de chaque trame TR déterminées comme étant valide lors de la vérification S50 de l'itération courante i, sont prises en compte en tant que zones de calibration ZC lors de la mise à jour S56 de l'interpolation spatiale. Il est ainsi possible de maximiser la quantité de zones du code graphique CG2 qui sont utilisées en tant que zones de calibration ZC lors de la mise à jour S56 de l'interpolation spatiale, et donc d'améliorer la qualité de l'interpolation spatiale.

Selon un exemple particulier, lors de la mise à jour S56 de l'interpolation spatiale, les zones Z de chaque trame TR détectées comme étant invalides, c'est-à-dire dont les couleurs réelle CLA ont été déterminées comme étant invalides lors de la précédente classification, sont exclue des zones prises en compte en tant que zones de calibration ZC. Les zones de données ZD et les zones de vérification ZV des trames invalides sont considérées comme étant erronées et ne sont donc pas utilisées en tant que zones de calibration ZC afin de ne pas dégrader la qualité de l'interpolation spatiale lors de sa mise à jour.

Au cours de l'étape S58 de mise à jour, l'unité de traitement DV3 met ensuite à jour la classification pour déterminer, à partir du résultat de l'interpolation spatiale mise à jour en S56 (lors de l'itération courante i), la couleur réelle CLA (autrement dit la classe) attribuée aux zones de données ZD et aux zones de vérification ZV du code graphique CG2. Cette mise à jour se fait donc ici par rapport à la précédente classification, c'est-à-dire la dernière classification S58 réalisée par l'unité de traitement DV3 à ce stade au cours du processus itératif S50 (lors de la précédente itération) ou, à défaut (s'il s'agit de la première itération du processus itératif S50), la classification initiale S12 réalisée au cours de la phase initiale S1. Dans le cas considéré ici (première itération), la précédente classification qui est donc mise à jour lors de l'étape S58 de mise à jour est la classification initiale S12 réalisée au cours de la phase initiale S1.

Lors de cette mise à jour S58, l'unité de traitement DV3 réalise à nouveau (réitère) la classification S12 (décrite ci-avant en référence aux **figures 4-5****)** lors de chaque itération courante i du processus itératif S50 pour déterminer les couleurs réelles CLA attribuées aux zones de données ZD et aux zones de vérification ZV en utilisant cette fois le résultat de l'interpolation spatiale nouvellement mise à jour en S56 lors de l'itération courante i du processus itératif S50.

En particulier, lors de la classification S12, l'unité de traitement DV3 peut réaliser pour chaque zone de données ZD analysée et pour chaque zone de vérification ZV analysée une étape S14 de comparaison et une étape S16 de détermination, comme déjà décrit précédemment en référence aux **figures 4-5****.**

Comme illustré en **figure 12****,** l'unité de traitement DV3 peut ainsi déterminer (S14) dans cet exemple, à partir des interpolations spatiales INT1, INT2 et INT3 mises à jour en S56 lors l'itération courante i, une estimation des couleurs théoriquement observables CLC pour chacune des couleurs de base CB1, CB2 et CB3 à la position d'une zone analysée Z12 qui peut être une zone de de données ZC ou une zone de vérification ZD. L'unité de traitement DV3 peut ensuite comparer (S14) la couleur observable mesurée dans ladite zone Z12 analysée avec les valeurs interpolées CLC1, CLC2 et CLC3 obtenues respectivement pour chacune des couleurs de base CB1, CB2 et CB3 à la position de la zone Z12 analysée. L'unité de traitement DV3 peut déterminer (S16) la couleur de base (à savoir CB1 dans cet exemple) pour laquelle la couleur théoriquement observable CLC obtenue par interpolation est la plus proche de la couleur observable CLB effectivement mesurée pour la zone Z12 considérée. L'unité de traitement DV3 en déduit que la zone Z12 analysée présente comme couleur réelle CLA la couleur de base (CB1 dans cet exemple) dont la couleur théoriquement observable CLC est la plus proche.

Cette mise à jour S58 permet ainsi d'améliorer progressivement la qualité de la classification au fur-et-à-mesure des itérations du processus itératif S50 en utilisant à chaque fois les résultats de l'interpolation spatiales mise à jour lors de l'itération courante i du processus itératif S50.

Une fois l'étape S58 de mise à jour achevée, une nouvelle itération i+1 du processus itératif S50 peut être réalisée par l'unité de traitement DV3 **(****figures 11-12****).** Au cours de cette nouvelle itération, l'unité de traitement DV3 réalise les étapes S52-S58 comme déjà décrit ci-dessus.

Selon l'exemple considéré ici, lors du processus itératif S50 **(****figures 11-12****),** l'unité de traitement DV3 vérifie la validité de toutes les trames TR au cours de l'étape S52 de vérification avant de débuter la mise à jour S56 de l'interpolation spatiale. Bien que d'autres implémentations soient possibles, cela permet de réaliser efficacement le processus itératif S50 dans la mesure où l'exécution de la mise à jour S56 de l'interpolation spatiale requiert généralement plus de ressources de traitement et de temps que la vérification S52 des trames TR. On peut ainsi améliorer encore davantage l'exécution du procédé de lecture. En variante, il est possible toutefois de débuter la mise à jour S56 de l'interpolation spatiale avant achèvement de la vérification S52, de sorte à prendre en compte en tant que zones de calibration ZC les zones Z de chaque trame TR déjà détectée comme valide au cours de l'exécution de la vérification S52.

Selon un exemple particulier, une pluralité d'itérations du processus itératif S50 sont réalisées. Le processus itératif S50 peut alors être répété jusqu'à ce que toutes les trames TR du code graphique CG2 soient déterminées comme étant valides lors de la vérification S52 d'une itération courante i. Le dispositif de lecture DV1 conclut alors que les couleurs réelles CLA des zones de données ZD et des zones de vérification ZV du code graphique CG2 sont celles déterminées lors de la mise à jour S58 de la classification lors de la dernière itération du processus itératif S50.

Autrement dit, le processus itératif S50 se poursuit jusqu'à converger vers des résultats de classification obtenus alors que plus aucune erreur n'est détectée dans les trames TR lors de l'étape S52 de vérification. En variante, le processus itératif S50 prend fin lorsque le nombre d'erreurs détectés dans les trames TR lors de la vérification S52 est inférieur à une valeur seuil prédéfinie.

Les modes de réalisation décrits ci-avant en référence à la **figure 11** permettent d'améliorer encore la qualité et l'efficacité du procédé de lecture de l'invention, dans la mesure où les zones des trames TR déterminées comme étant valides peuvent être utilisées en tant que zone de calibration ZC en plus des zones de calibration ZC présentes par nature dans le code graphique 2D. L'utilisation de nouvelles zones Z du code graphique en tant que zones de calibration ZC permet d'améliorer l'interpolation spatiale réalisée à chaque itération du processus itératif et donc de diminuer les erreurs susceptibles de se produire lors de la classification qui s'en suit.

L'invention permet ainsi de réaliser une lecture fiable et précise d'un code graphique 2D de haute densité, quelles que soient les conditions d'acquisition, avec une efficacité de traitement accrue et des résultats encore améliorés.

En outre, il est possible de limiter la portion du code graphique 2D réservée par configuration aux zones de calibration ZC tout en maintenant de bonnes performances de lecture. En effet, les zones de calibration ZC prédéfinies à l'origine dans le code graphique 2D permettent d'amorcer l'exécution du processus itératif S50 **(****figure 11****).** Une fois ce processus itératif enclenché, des zones de données ZD et des zones de vérification ZV de trames valides peuvent être traitées comme des zones de calibration ZC au cours de l'interpolation spatiale afin d'affiner progressivement les résultats.

Grâce à l'invention, on peut donc limiter l'espace réservé aux zones de calibration ZC dans un code graphique 2D et ainsi augmenter la quantité d'information pouvant être stockée dans les zones de données ZD tout en assurant des bonnes performances de lecture.

Selon un exemple particulier, les zones de vérification ZV comprises dans le code graphique CG2 (avant l'exécution dudit processus itératif S50) représentent au maximum 10% de la surface totale du code graphique CG2.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou variantes décrits ci-avant afin de répondre à un besoin bien particulier, l'invention étant définie par les revendications jointes.

## Revendications

1. Procédé de lecture, mis en oeuvre par un dispositif de lecture (DV1), d'un code graphique 2D (CG1 ; CG2) comprenant une pluralité de zones (Z) présentant chacune une unique couleur réelle (CLA) qui lui est attribuée dans une base (BS1) de N couleurs distinctes, N étant un entier tel que N ≥ 2,
lesdites zones comprenant :
- des zones de données (ZD) encodant des informations à partir des couleurs réelles desdites zones de données ; et
- au moins 2N zones de calibration (ZC) à des positions prédéfinies dans le code graphique 2D, la couleur réelle de chaque zone de calibration étant une couleur de référence prédéfinie dans ladite base de couleurs, le code graphique 2D comprenant au moins 2 zones de calibration pour chaque couleur de la base de couleurs,
le procédé comprenant les étapes suivantes :
- acquisition optique (S2) du code graphique 2D dans des conditions d'acquisition courantes (CD1) pour obtenir des données d'image (DT1) ;
- mesure (S4), à partir des données d'image, de la couleur observable (CLB) dans les zones de calibration dans les conditions d'acquisition courantes ;
- interpolation spatiale (S10), à partir des couleurs observables (CLB) mesurées dans les zones de calibration et des positions prédéfinies desdites zones de calibration, pour produire une estimation de la couleur théoriquement observable (CLC) dans les conditions d'acquisition courantes pour chaque couleur de la base de couleurs (BS1) dans chacune des zones de données en fonction de la position de ladite zone de données considérée; et
- classification (S12) à partir du résultat de l'interpolation spatiale pour déterminer la couleur réelle (CLA) attribuée à chaque zone de données (ZD) analysée, comprenant pour chaque zone de données analysée :
∘ comparaison (S14) de la couleur observable mesurée dans ladite zone de données analysée avec la couleur théoriquement observable estimée pour chaque couleur de la base de couleurs à la position de ladite zone de données analysée ; et
∘ détermination (S16), en tant que couleur réelle de ladite zone de données analysée, de la couleur de la base de couleurs dont la couleur théoriquement observable estimée à la position de ladite zone de données analysée est la plus proche de la couleur observable mesurée dans ladite zone de données analysée.

2. Procédé selon la revendication 1, comprenant en outre : détermination (S18) d'informations (IF1) encodées dans le code graphique 2D à partir de la couleur réelle déterminée lors de ladite classification comme étant attribuée à chaque zone de données analysée.

3. Procédé selon la revendication 1 ou 2, comprenant en outre une détection (S6) des zones de calibration dans le code graphique 2D à partir des données d'image et à partir de données de position préalablement enregistrées qui comprennent les positions prédéfinies de chaque zone de calibration dans le code graphique 2D.

4. Procédé selon l'une quelconque des revendications 1 à 3, dans lequel lors de l'interpolation spatiale (S10), une estimation de la couleur théoriquement observable dans les conditions d'acquisition courantes pour chaque couleur de la base de couleurs est produite dans la position de chaque zone de données du code graphique 2D.

5. Procédé selon l'une quelconque des revendications 1 à 4, dans lequel l'interpolation spatiale (S10) est réalisée de sorte à attribuer, pour au moins une zone de données, des poids (W) différents aux couleurs observables (CLB) mesurées dans les zones de calibration en fonction de la distance séparant lesdites zones de calibration de ladite zone de données.

6. Procédé selon la revendication 5, dans lequel lors de l'interpolation spatiale (S10), l'estimation de la couleur théoriquement observable (CLC) pour chaque couleur de la base de couleurs est adaptée dans chaque zone de données (ZD) de sorte qu'un poids (W) plus important est attribué à une couleur observable mesurée dans une première zone de calibration présentant une couleur de référence dans la base de couleurs par rapport à une couleur observable mesurée dans au moins une autre deuxième zone de calibration présentant ladite couleur de référence si ladite première zone de calibration est plus proche de ladite zone de données que ladite au moins une deuxième zone de calibration.

7. Procédé selon l'une quelconque des revendications 1 à 6, dans lequel ladite comparaison (S14) comprend :
- détermination d'un écart de couleur respectif (e1-e3) entre la couleur observable mesurée dans ladite zone de données analysée et la couleur théoriquement observable estimée pour chaque couleur de la base de couleurs à la position de ladite zone de données analysée,
dans lequel ladite couleur réelle déterminée en tant que couleur attribuée à ladite zone de données analysée est la couleur de la base de couleurs pour laquelle ledit écart est le plus faible.

8. Procédé selon l'une quelconque des revendications 1 à 7, dans lequel les zones de calibration (ZC) sont réparties de manière uniforme sur toute la surface du code graphique 2D.

9. Procédé selon l'une quelconque des revendications 1 à 8, dans lequel les zones de calibration (ZC) sont réparties de manière aléatoire sur la surface du code graphique 2D.

10. Procédé selon l'une quelconque des revendications 1 à 9, comprenant en outre :
- détection (S30) de zones d'aberration dans le code graphique 2D ;
- calcul (S32) de la position moyenne et de la variance de position des zones d'aberration dans le code graphique 2D ; et
- localisation (S34) d'une région d'aberration dans le code graphique 2D à partir de la position moyenne et de la variance de position ;
dans lequel l'interpolation spatiale (S10) comprend :
- vérification (S36), pour chaque zone de données, si elle se trouve dans la région d'aberration ; et
- dans l'affirmative, l'interpolation spatiale est réalisée (S36) dans ladite zone de données de sorte à attribuer des poids plus importants aux couleurs observables mesurées dans les zones de calibration situées dans la région d'aberration qu'aux couleurs observables mesurées dans les zones de calibration situées hors de la région d'aberration.

11. Procédé selon l'une quelconque des revendications 1 à 10, dans
lequel les zones de données (ZD) sont regroupées en trames (TR) d'au moins deux zones de données, les zones du code graphique 2D (CG2) comprenant en outre des zones de vérification (ZV), au moins une zone de vérification étant associée à chacune desdites trames ;
dans lequel l'étape d'interpolation spatiale (S10) est appliquée aux zones de données et aux zones de vérification de sorte à produire une estimation de la couleur théoriquement observable dans les conditions d'acquisition courantes pour chaque couleur de la base de couleurs dans les positions des zones de données et des zones de vérification ;
dans lequel l'étape de classification (S12) est appliquée aux zones de données et aux zones de vérification de sorte à déterminer, à partir de l'interpolation spatiale, la couleur réelle attribuée aux zones de données et aux zones de vérification du code graphique 2D,
le procédé comprenant un processus itératif (S50) comprenant au cours d'au moins une itération courante (i) :
- vérification (S52), pour chaque trame du code graphique 2D, de la validité des couleurs réelles déterminées lors de la précédente classification pour les zones de données de ladite trame, à partir de la couleur réelle déterminée lors de ladite précédente classification pour ladite au moins une zone de vérification de ladite trame ;
- une mise à jour (S56) de l'interpolation spatiale en utilisant, en tant que zone de calibration, tout ou partie des zones des trames dont les couleurs des zones de données ont été déterminées comme étant valides lors de ladite vérification de l'itération courante ; et
- une mise à jour (S58) de la classification pour déterminer, à partir du résultat de l'interpolation spatiale mise à jour, la couleur réelle attribuée aux zones de données et aux zones de vérification du code graphique 2D.

12. Procédé selon la revendication 11, au cours de la vérification (S52), la validité de chaque trame est vérifiée en réalisant un calcul d'intégrité sur les couleurs réelles déterminées lors de ladite précédente classification pour les zones de données de la trame et en comparant le résultat dudit calcul d'intégrité avec la couleur réelle déterminée lors de ladite précédente classification pour ladite au moins une zone de vérification de ladite trame.

13. Procédé selon la revendication 12, dans lequel, lors de la mise à jour (S56) de l'interpolation, chaque zone de données ainsi que ladite au moins une zone de vérification associée de chaque trame dont les couleurs des zones de données ont été déterminées comme étant valides lors de ladite vérification sont prises en compte en tant que zones de calibration lors de la mise à jour de l'interpolation spatiale.

14. Procédé selon la revendication 12 ou 13, dans lequel, lors de la mise à jour (S56) de l'interpolation spatiale, les zones de chaque trame dont les couleurs réelles ont été déterminées comme étant invalides lors de la précédente classification sont exclues des zones prises en compte en tant que zone de calibration.

15. Procédé selon l'une quelconque des revendications 11 à 14, dans lequel lors de la mise à jour (S58) de la classification, la couleur réelle déterminée comme étant attribuée à au moins une zone de données est corrigée à partir de ladite au moins une zone de vérification associée à la trame de ladite zone de données.

16. Procédé selon l'une quelconque des revendications 11 à 15, dans lequel lors d'une itération courante du processus itératif, la validité des couleurs déterminées lors de la précédente classification pour les zones de données de chaque trame du code graphique 2D est vérifiée (S52), avant de réaliser la mise à jour (S56) de l'interpolation spatiale à partir du résultat de l'interpolation spatiale mise à jour.

17. Procédé selon l'une quelconque des revendications 11 à 16, dans
lequel le procédé comprend une pluralité d'itérations du processus itératif (S50), ledit processus itératif étant répété jusqu'à ce que toutes les trames du code graphique 2D soient déterminées comme étant valides lors de ladite vérification d'une itération courante,
les couleurs réelles de chaque zone de données et chaque zone de vérification étant celles déterminées lors de la mise à jour de la classification de la dernière itération.

18. Programme d'ordinateur (PG1) comportant des instructions pour l'exécution des étapes d'un procédé de lecture selon l'une quelconque des revendications 1 à 17 lorsque ledit programme est exécuté par un ordinateur.

19. Dispositif de lecture (DV1) pour lire un code graphique 2D (CG1 ;
CG2) comprenant une pluralité de zones (Z) présentant chacune une unique couleur réelle (CLA) qui lui est attribuée dans une base (BS1) de N couleurs distinctes, N étant un entier tel que N ≥ 2,
lesdites zones comprenant :
- des zones de données (ZD) encodant des informations à partir des couleurs réelles desdites zones de données ; et
- au moins 2N zones de calibration (ZC) à des positions prédéfinies dans le code graphique 2D, la couleur réelle de chaque zone de calibration étant une couleur de référence prédéfinie dans ladite base de couleurs, le code graphique 2D comprenant au moins 2 zones de calibration pour chaque couleur de la base de couleurs,
le dispositif comprenant :
- un dispositif d'acquisition optique (DV1) configuré pour réaliser une acquisition optique du code graphique 2D dans des conditions d'acquisition courantes pour obtenir des données d'image ;
- un module de mesure (MD2) configuré pour mesurer, à partir des données d'image, la couleur observable dans les zones de calibration dans les conditions d'acquisition courantes ;
- un module d'interpolation spatiale (MD4) configuré pour réaliser une interpolation spatiale, à partir des couleurs observables mesurées dans les zones de calibration et des positions prédéfinies desdites zones de calibration, de sorte à produire une estimation de la couleur théoriquement observable dans les conditions d'acquisition courantes pour chaque couleur de la base de couleurs dans chacune des zones de données en fonction de la position de ladite zone de données considérée; et
- un module de classification (MD6) configuré pour déterminer, à partir du résultat de l'interpolation spatiale, la couleur réelle attribuée à chaque zone de données analysée, ledit module de classification étant configuré pour réaliser pour chaque zone de données analysée :
∘ comparaison de la couleur observable mesurée dans ladite zone de données analysée avec la couleur théoriquement observable estimée pour chaque couleur de la base de couleurs à la position de ladite zone de données analysée ; et
∘ détermination, en tant que couleur réelle de ladite zone de données analysée, de la couleur de la base de couleurs dont la couleur théoriquement observable estimée à la position de ladite zone de données analysée est la plus proche de la couleur observable mesurée dans ladite zone de données analysée.

## Patentansprüche

1. Von einer Lesevorrichtung (DV1) durchgeführtes Verfahren zum Lesen eines 2D-Graphikcodes (CG1; CG2), der eine Mehrzahl von Bereichen (Z) umfasst, die jeweils eine eindeutige tatsächliche Farbe (CLA) aufweisen, die ihm aus einer Farbenbank (BS1) aus N gesonderten Farben zugewiesen ist, wobei N eine Ganzzahl ist, so dass N ≥ 2, wobei die Bereiche Folgendes umfassen:
- Datenbereiche (ZD), die Informationen anhand der tatsächlichen Farben der Datenbereiche codieren; und
- wenigstens 2N Kalibrierungsbereiche (ZC) an vorgegebenen Positionen im 2D-Graphikcode, wobei die tatsächliche Farbe jedes Kalibrierungsbereichs eine in der Farbenbank vorgegebene Referenzfarbe ist, wobei der 2D-Graphikcode wenigstens 2 Kalibrierungsbereiche für jede Farbe der Farbenbank umfasst,
wobei das Verfahren die folgenden Schritte umfasst:
- optisches Erfassen (S2) des 2D-Graphikcodes unter üblichen Erfassungsbedingungen (CD1), um Bilddaten (DT1) zu erhalten;
- Messen (S4), anhand der Bilddaten, der beobachtbaren Farbe (CLB) in den Kalibrierungsbereichen unter den üblichen Erfassungsbedingungen;
- räumliches Interpolieren (S10), anhand der beobachtbaren Farben (CLB), die in den Kalibrierungsbereichen gemessen werden, und der vorgegebenen Positionen der Kalibrierungsbereiche, um eine Schätzung der theoretisch beobachtbaren Farbe (CLC) unter den üblichen Erfassungsbedingungen für jede Farbe der Farbenbank (BS1) in jedem der Datenbereiche je nach der Position des betrachteten Datenbereichs zu erzeugen; und
- Klassifizieren (S12) anhand des Ergebnisses der räumlichen Interpolation, um die tatsächliche Farbe (CLA) zu bestimmen, die jedem analysierten Datenbereich (ZD) zugewiesen ist, umfassend für jeden analysierten Datenbereich:
∘ Vergleichen (S14) der beobachtbaren Farbe, die im analysierten Datenbereich gemessen wird, mit der theoretisch beobachtbaren Farbe, die für jede Farbe der Farbenbank an der Position des analysierten Datenbereichs geschätzt wird; und
∘ Bestimmen (S16), als tatsächliche Farbe des analysierten Datenbereichs, der Farbe der Farbenbank, deren theoretisch beobachtbare Farbe, die an der Position des analysierten Datenbereichs geschätzt wird, der beobachtbaren Farbe am nächsten ist, die im analysierten Datenbereich gemessen wird.

2. Verfahren nach Anspruch 1, ferner umfassend: Bestimmen (S18) von Informationen (IF1), die im 2D-Graphikcode codiert sind, anhand der tatsächlichen Farbe, die beim Klassifizieren als jedem analysierten Datenbereich zugewiesen bestimmt wird.

3. Verfahren nach Anspruch 1 oder 2, ferner umfassend ein Detektieren (S6) der Kalibrierungsbereiche im 2D-Graphikcode anhand der Bilddaten und anhand von vorab gespeicherten Positionsdaten, die die vorgegebenen Positionen jedes Kalibrierungsbereichs im 2D-Graphikcode umfassen.

4. Verfahren nach einem der Ansprüche 1 bis 3, wobei beim räumlichen Interpolieren (S10) eine Schätzung der theoretisch beobachtbaren Farbe unter den üblichen Erfassungsbedingungen für jede Farbe der Farbenbank in der Position jedes Datenbereichs des 2D-Graphikcodes erzeugt wird.

5. Verfahren nach einem der Ansprüche 1 bis 4, wobei die räumliche Interpolation (S10) durchgeführt wird, um für wenigstens einen Datenbereich verschiedene Gewichte (W) den beobachtbaren Farben (CLB) zuzuweisen, die in den Kalibrierungsbereichen gemessen werden, je nach dem Abstand, der die Kalibrierungsbereiche vom Datenbereich trennt.

6. Verfahren nach Anspruch 5, wobei beim räumlichen Interpolieren (S10) die Schätzung der theoretisch beobachtbaren Farbe (CLC) für jede Farbe der Farbenbank in jedem Datenbereich (ZD) so angepasst wird, dass ein höheres Gewicht (W) einer beobachtbaren Farbe zugewiesen wird, die in einem ersten Kalibrierungsbereich gemessen wird, der eine Referenzfarbe in der Farbenbank im Verhältnis zu einer beobachtbaren Farbe aufweist, die in wenigstens einem anderen, zweiten Kalibrierungsbereich gemessen wird, der die Referenzfarbe aufweist, wenn der erste Kalibrierungsbereich näher an dem Datenbereich ist als der wenigstens eine zweite Kalibrierungsbereich.

7. Verfahren nach einem der Ansprüche 1 bis 6, wobei das Vergleichen (S14) Folgendes umfasst:
- Bestimmen eines jeweiligen Farbabstands (e1-e3) zwischen der beobachtbaren Farbe, die im analysierten Datenbereich gemessen wird, und der theoretisch beobachtbaren Farbe, die für jede Farbe der Farbenbank an der Position des analysierten Datenbereichs geschätzt wird,
wobei die tatsächliche Farbe, die als Farbe bestimmt wird, die dem analysierten Datenbereich zugewiesen ist, die Farbe der Farbenbank ist, für die der Abstand der geringste ist.

8. Verfahren nach einem der Ansprüche 1 bis 7, wobei die Kalibrierungsbereiche (ZC) gleichmäßig über die gesamte Fläche des 2D-Graphikcodes verteilt sind.

9. Verfahren nach einem der Ansprüche 1 bis 8, wobei die Kalibrierungsbereiche (ZC) zufällig über die Fläche des 2D-Graphikcodes verteilt sind.

10. Verfahren nach einem der Ansprüche 1 bis 9, ferner umfassend:
- Detektieren (S30) von Aberrationsbereichen im 2D-Graphikcode;
- Berechnen (S32) der mittleren Position und der Positionsvarianz der Aberrationsbereiche im 2D-Graphikcode; und
- Lokalisieren (S34) einer Aberrationsregion im 2D-Graphikcode anhand der mittleren Position und der Positionsvarianz;
wobei das räumliche Interpolieren (S10) Folgendes umfasst:
- Überprüfen (S36), für jeden Datenbereich, ob er sich in der Aberrationsregion befindet; und
- wenn positiv, wird die räumliche Interpolation in dem Datenbereich so durchgeführt (S36), dass den beobachtbaren Farben, die in den Kalibrierungsbereichen gemessen werden, die sich in der Aberrationsregion befinden, höhere Gewichte zugewiesen werden als den beobachtbaren Farben, die in den Kalibrierungsbereichen gemessen werden, die sich außerhalb der Aberrationsregion befinden.

11. Verfahren nach einem der Ansprüche 1 bis 10, wobei die Datenbereiche (ZD) in Rahmen (TR) wenigstens zweier Datenbereiche gruppiert sind, wobei die Bereiche des 2D-Graphikcodes (CG2) ferner Überprüfungsbereiche (ZV) umfassen, wobei wenigstens ein Überprüfungsbereich jedem der Rahmen zugeordnet ist;
wobei der Schritt des räumlichen Interpolierens (S10) auf die Datenbereiche und die Überprüfungsbereiche angewandt wird, um eine Schätzung der theoretisch beobachtbaren Farbe unter den üblichen Erfassungsbedingungen für jede Farbe der Farbenbank in den Positionen der Datenbereiche und der Überprüfungsbereiche zu erzeugen;
wobei der Schritt des Klassifizierens (S12) auf die Datenbereiche und die Überprüfungsbereiche angewandt wird, um anhand der räumlichen Interpolation die tatsächliche Farbe zu bestimmen, die den Datenbereichen und den Überprüfungsbereichen des 2D-Graphikcodes zugewiesen ist,
wobei das Verfahren einen iterativen Prozess (S50) umfasst, der im Verlauf wenigstens einer aktuellen Iteration (i) Folgendes umfasst:
- Überprüfen (S52), für jeden Rahmen des 2D-Graphikcodes, der Gültigkeit der tatsächlichen Farben, die bei der vorigen Klassifizierung für die Datenbereiche des Rahmens bestimmt wurden, anhand der tatsächlichen Farbe, die bei der vorigen Klassifizierung für den wenigstens einen Überprüfungsbereich des Rahmens bestimmt wurde;
- eine Aktualisierung (S56) der räumlichen Interpolation unter Verwendung, als Kalibrierungsbereich, der gesamten oder eines Abschnitts der Bereiche der Rahmen, deren Farben der Datenbereiche bei der Überprüfung der aktuellen Iteration als gültig bestimmt wurden; und
- eine Aktualisierung (S58) der Klassifizierung, um anhand des Ergebnisses der aktualisierten räumlichen Interpolation die tatsächliche Farbe zu bestimmen, die den Datenbereichen und den Überprüfungsbereichen des 2D-Graphikcodes zugewiesen ist.

12. Verfahren nach Anspruch 11, wobei im Verlauf des Überprüfens (S52) die Gültigkeit jedes Rahmens überprüft wird, indem eine Integritätsberechnung an den tatsächlichen Farben durchgeführt wird, die bei der vorigen Klassifizierung für die Datenbereiche des Rahmens bestimmt wurden, und das Ergebnis der Integritätsberechnung mit der tatsächlichen Farbe verglichen wird, die bei der vorigen Klassifizierung für den wenigstens einen Überprüfungsbereich des Rahmens bestimmt wurde.

13. Verfahren nach Anspruch 12, wobei bei der Aktualisierung (S56) der Interpolation jeder Datenbereich sowie der wenigstens eine zugehörige Überprüfungsbereich jedes Rahmens, dessen Farben der Datenbereiche bei der Überprüfung als gültig bestimmt wurden, bei der Aktualisierung der räumlichen Interpolation als Kalibrierungsbereiche berücksichtigt werden.

14. Verfahren nach Anspruch 12 oder 13, wobei bei der Aktualisierung (S56) der räumlichen Interpolation die Bereiche jedes Rahmens, deren tatsächliche Farben bei der vorigen Klassifizierung als ungültig bestimmt wurden, aus den Bereichen ausgeschlossen werden, die als Kalibrierungsbereich berücksichtigt werden.

15. Verfahren nach einem der Ansprüche 11 bis 14, wobei bei der Aktualisierung (S58) der Klassifizierung die tatsächliche Farbe, die als wenigstens einem Datenbereich zugewiesen bestimmt wird, anhand des wenigstens einen Überprüfungsbereichs korrigiert wird, der dem Rahmen des Datenbereichs zugewiesen ist.

16. Verfahren nach einem der Ansprüche 11 bis 15, wobei bei einer aktuellen Iteration des iterativen Prozesses die Gültigkeit der Farben, die bei der vorigen Klassifizierung für die Datenbereiche jedes Rahmens des 2D-Graphikcodes bestimmt wurden, überprüft (S52) wird, bevor die Aktualisierung (S56) der räumlichen Interpolation anhand des Ergebnisses der aktualisierten räumlichen Interpolation durchgeführt wird.

17. Verfahren nach einem der Ansprüche 11 bis 16, wobei das Verfahren eine Mehrzahl von Iterationen des iterativen Prozesses (S50) umfasst, wobei der iterative Prozess wiederholt wird, bis alle Rahmen des 2D-Graphikcodes bei der Überprüfung einer aktuellen Iteration als gültig bestimmt sind,
wobei die tatsächlichen Farben jedes Datenbereichs und jedes Überprüfungsbereichs jene sind, die bei der Aktualisierung der Klassifizierung der letzten Iteration bestimmt werden.

18. Computerprogramm (PG1), aufweisend Anweisungen zur Ausführung der Schritte eines Leseverfahrens nach einem der Ansprüche 1 bis 17, wenn das Programm von einem Computer ausgeführt wird.

19. Lesevorrichtung (DV1) zum Lesen eines 2D-Graphikcodes (CG1; CG2), der eine Mehrzahl von Bereichen (Z) umfasst, die jeweils eine eindeutige tatsächliche Farbe (CLA) aufweisen, die ihm aus einer Farbenbank (BS1) aus N gesonderten Farben zugewiesen ist, wobei N eine Ganzzahl ist, so dass N ≥ 2,
wobei die Bereiche Folgendes umfassen:
- Datenbereiche (ZD), die Informationen anhand der tatsächlichen Farben der Datenbereiche codieren; und
- wenigstens 2N Kalibrierungsbereiche (ZC) an vorgegebenen Positionen im 2D-Graphikcode, wobei die tatsächliche Farbe jedes Kalibrierungsbereichs eine in der Farbenbank vorgegebene Referenzfarbe ist, wobei der 2D-Graphikcode wenigstens 2 Kalibrierungsbereiche für jede Farbe der Farbenbank umfasst,
die Vorrichtung umfassend:
- eine optische Erfassungsvorrichtung (DV1), die dazu ausgebildet ist, eine optische Erfassung des 2D-Graphikcodes unter üblichen Erfassungsbedingungen durchzuführen, um Bilddaten zu erhalten;
- ein Messmodul (MD2), das dazu ausgebildet ist, anhand der Bilddaten die beobachtbare Farbe in den Kalibrierungsbereichen unter den üblichen Erfassungsbedingungen zu messen;
- ein Modul für räumliche Interpolation (MD4), das dazu ausgebildet ist, anhand der beobachtbaren Farben, die in den Kalibrierungsbereichen gemessen werden, und der vorgegebenen Positionen der Kalibrierungsbereiche eine räumliche Interpolation durchzuführen, um eine Schätzung der theoretisch beobachtbaren Farbe unter den üblichen Erfassungsbedingungen für jede Farbe der Farbenbank in jedem der Datenbereiche je nach der Position des betrachteten Datenbereichs zu erzeugen; und
- ein Klassifizierungsmodul (MD6), das dazu ausgebildet ist, anhand des Ergebnisses der räumlichen Interpolation die tatsächliche Farbe zu bestimmen, die jedem analysierten Datenbereich zugewiesen ist, wobei das Klassifizierungsmodul dazu ausgebildet ist, für jeden analysierten Datenbereich Folgendes durchzuführen:
∘ Vergleichen der beobachtbaren Farbe, die im analysierten Datenbereich gemessen wird, mit der theoretisch beobachtbaren Farbe, die für jede Farbe der Farbenbank an der Position des analysierten Datenbereichs geschätzt wird; und
∘ Bestimmen, als tatsächliche Farbe des analysierten Datenbereichs, der Farbe der Farbenbank, deren theoretisch beobachtbare Farbe, die an der Position des analysierten Datenbereichs geschätzt wird, der beobachtbaren Farbe am nächsten ist, die im analysierten Datenbereich gemessen wird.

## Claims

1. Reading method, implemented by a reading device (DV1), for reading a 2D graphic code (CG1; CG2) comprising a plurality of zones (Z) each having a single real colour (CLA) that is assigned thereto from a base (BS1) of N distinct colours, N being an integer such that N ≥ 2,
said zones comprising:
- data zones (ZD) encoding information based on the real colours of said data zones; and
- at least 2N calibration zones (ZC) at predefined positions in the 2D graphic code, the real colour of each calibration zone being a predefined reference colour from said colour base, the 2D graphic code comprising at least 2 calibration zones for each colour in the colour base,
the method comprising the following steps:
- optically acquiring (S2) the 2D graphic code under current acquisition conditions (CD1) so as to obtain image data (DT1);
- based on the image data, measuring (S4) the observable colour (CLB) in the calibration zones under the current acquisition conditions;
- carrying out spatial interpolation (S10), based on the observable colours (CLB) measured in the calibration zones and on the predefined positions of said calibration zones, so as to produce an estimate of the theoretically observable colour (CLC) under the current acquisition conditions for each colour in the colour base (BS1) in each of the data zones on the basis of the position of said data zone under consideration; and
- carrying out classification (S12) based on the result of the spatial interpolation so as to determine the real colour (CLA) assigned to each analysed data zone (ZD), comprising, for each analysed data zone:
∘ comparing (S14) the observable colour measured in said analysed data zone with the estimated theoretically observable colour for each colour in the colour base at the position of said analysed data zone; and
∘ determining (S16), as the real colour of said analysed data zone, the colour in the colour base for which the estimated theoretically observable colour at the position of said analysed data zone is closest to the observable colour measured in said analysed data zone.

2. Method according to Claim 1, furthermore comprising:
determining (S18) information (IF1) encoded in the 2D graphic code based on the real colour determined during said classification as being assigned to each analysed data zone.

3. Method according to Claim 1 or 2, furthermore comprising detecting (S6) the calibration zones in the 2D graphic code based on the image data and based on previously recorded position data that comprise the predefined positions of each calibration zone in the 2D graphic code.

4. Method according to any one of Claims 1 to 3, wherein, during the spatial interpolation (S10), an estimate of the theoretically observable colour under the current acquisition conditions for each colour in the colour base is produced in the position of each data zone of the 2D graphic code.

5. Method according to any one of Claims 1 to 4, wherein the spatial interpolation (S10) is carried out so as to assign, for at least one data zone, different weights (W) to the observable colours (CLB) measured in the calibration zones on the basis of the distance between said calibration zones and said data zone.

6. Method according to Claim 5, wherein, during the spatial interpolation (S10), the estimate of the theoretically observable colour (CLC) for each colour in the colour base is adapted in each data zone (ZD) such that a greater weight (W) is assigned to an observable colour measured in a first calibration zone having a reference colour in the colour base compared to an observable colour measured in at least one other second calibration zone having said reference colour if said first calibration zone is closer to said data zone than said at least one second calibration zone.

7. Method according to any one of Claims 1 to 6, wherein said comparison (S14) comprises:
- determining a respective colour difference (e1-e3) between the observable colour measured in said analysed data zone and the estimated theoretically observable colour for each colour in the colour base at the position of said analysed data zone,
wherein said real colour determined as colour assigned to said analysed data zone is the colour in the colour base for which said difference is smallest.

8. Method according to any one of Claims 1 to 7, wherein the calibration zones (ZC) are distributed uniformly over the entire surface of the 2D graphic code.

9. Method according to any one of Claims 1 to 8, wherein the calibration zones (ZC) are distributed randomly over the surface of the 2D graphic code.

10. Method according to any one of Claims 1 to 9, furthermore comprising:
- detecting (S30) aberration zones in the 2D graphic code;
- computing (S32) the average position and the positional variance of the aberration zones in the 2D graphic code; and
- locating (S34) an aberration region in the 2D graphic code based on the average position and the positional variance;
wherein the spatial interpolation (S10) comprises:
- verifying (S36), for each data zone, whether it is located within the aberration region; and
- if so, the spatial interpolation is carried out (S36) in said data zone so as to assign greater weights to the observable colours measured in the calibration zones situated in the aberration region than to the observable colours measured in the calibration zones situated outside the aberration region.

11. Method according to any one of Claims 1 to 10, wherein the data zones (ZD) are grouped into frames (TR) of at least two data zones, the zones of the 2D graphic code (CG2) furthermore comprising verification zones (ZV), at least one verification zone being associated with each of said frames;
wherein the spatial interpolation step (S10) is applied to the data zones and to the verification zones so as to produce an estimate of the theoretically observable colour under the current acquisition conditions for each colour in the colour base in the positions of the data zones and of the verification zones;
wherein the classification step (S12) is applied to the data zones and to the verification zones so as to determine, based on the spatial interpolation, the real colour assigned to the data zones and to the verification zones of the 2D graphic code,
the method comprising an iterative process (S50) comprising, in the course of at least one current iteration (i):
- for each frame of the 2D graphic code, verifying (S52) the validity of the real colours determined in the previous classification for the data zones of said frame, based on the real colour determined in said previous classification for said at least one verification zone of said frame;
- updating (S56) the spatial interpolation using, as calibration zone, all or some of the zones of the frames for which the colours of the data zones were determined as being valid in said verification of the current iteration; and
- updating (S58) the classification so as to determine, based on the result of the updated spatial interpolation, the real colour assigned to the data zones and to the verification zones of the 2D graphic code.

12. Method according to Claim 11, in the course of the verification (S52), the validity of each frame is verified by carrying out an integrity computation on the real colours determined in said previous classification for the data zones of the frame and by comparing the result of said integrity computation with the real colour determined in said previous classification for said at least one verification zone of said frame.

13. Method according to Claim 12, wherein, when updating (S56) the interpolation, each data zone, along with said at least one associated verification zone of each frame for which the colours of the data zones were determined as being valid in said verification, are taken into account as calibration zones when updating the spatial interpolation.

14. Method according to Claim 12 or 13, wherein, when updating (S56) the spatial interpolation, the zones of each frame for which the real colours were determined as being invalid in the previous classification are excluded from the zones taken into account as calibration zone.

15. Method according to any one of Claims 11 to 14, wherein, when updating (S58) the classification, the real colour determined as being assigned to at least one data zone is corrected based on said at least one verification zone associated with the frame of said data zone.

16. Method according to any one of Claims 11 to 15, wherein, in a current iteration of the iterative process, the validity of the colours determined in the previous classification for the data zones of each frame of the 2D graphic code is verified (S52) before updating (S56) the spatial interpolation based on the result of the updated spatial interpolation.

17. Method according to any one of Claims 11 to 16, wherein the method comprises a plurality of iterations of the iterative process (S50), said iterative process being repeated until all of the frames of the 2D graphic code are determined as being valid in said verification of a current iteration, the real colours of each data zone and each verification zone being those determined when updating the classification of the last iteration.

18. Computer program (PG1) comprising instructions for executing the steps of a reading method according to any one of Claims 1 to 17 when said program is executed by a computer.

19. Reading device (DV1) for reading a 2D graphic code (CG1; CG2) comprising a plurality of zones (Z) each having a single real colour (CLA) that is assigned thereto from a base (BS1) of N distinct colours, N being an integer such that N ≥ 2,
said zones comprising:
- data zones (ZD) encoding information based on the real colours of said data zones; and
- at least 2N calibration zones (ZC) at predefined positions in the 2D graphic code, the real colour of each calibration zone being a predefined reference colour from said colour base, the 2D graphic code comprising at least 2 calibration zones for each colour in the colour base,
the device comprising:
- an optical acquisition device (DV1) configured to optically acquire the 2D graphic code under current acquisition conditions so as to obtain image data;
- a measuring module (MD2) configured, based on the image data, to measure the observable colour in the calibration zones under the current acquisition conditions;
- a spatial interpolation module (MD4) configured to carry out spatial interpolation, based on the observable colours measured in the calibration zones and on the predefined positions of said calibration zones, so as to produce an estimate of the theoretically observable colour under the current acquisition conditions for each colour in the colour base in each of the data zones on the basis of the position of said data zone under consideration; and
- a classification module (MD6) configured, based on the result of the spatial interpolation, to determine the real colour assigned to each analysed data zone, said classification module being configured, for each analysed data zone, to:
∘ compare the observable colour measured in said analysed data zone with the estimated theoretically observable colour for each colour in the colour base at the position of said analysed data zone; and
∘ determine, as the real colour of said analysed data zone, the colour in the colour base for which the estimated theoretically observable colour at the position of said analysed data zone is closest to the observable colour measured in said analysed data zone.
